# EUROPÄISCHE PATENTSCHRIFT

(11) **EP 1 976 723 B1**
(45) Veröffentlichungstag und Bekanntmachung des Hinweises auf die Patenterteilung: **14.07.2010**
(21) Anmeldenummer: 06841017.4
(22) Anmeldetag: 19.12.2006
(51) Int. Cl.: B60N 2/20

(54) **BESCHLAG FÜR EINEN FAHRZEUGSITZ**
FITTING FOR A VEHICLE SEAT
FERRURE POUR SIEGE DE VEHICULE

(30) Priorität: 24.01.2006 DE 102006003243; 24.01.2006 DE 202006013783 U; 24.01.2006 DE 102006003241; 21.09.2006 DE 102006044489; 17.10.2006 DE 202006015871 U
(43) Veröffentlichungstag der Anmeldung: 08.10.2008
(73) Patentinhaber: KEIPER GmbH & Co. KG, 67657 Kaiserslautern (DE)
(72) Erfinder: THIEL, Peter, 42899 Remscheid (DE); VEDDER, Andreas, 42781 Haan (DE)
(74) Vertreter: Patentanwälte Hosenthien-Held und Dr. Held
(86) Internationale Anmeldenummer: PCT/EP2006/012208
(87) Internationale Veröffentlichungsnummer: WO 2007/087876

(56) Entgegenhaltungen:
- DE-A1- 10 012 009
- DE-A1- 10 235 349
- DE-A1- 10 313 807
- GB-A- 2 358 132

## Beschreibung

Die Erfindung betrifft einen Beschlag für einen Fahrzeugsitz, insbesondere für einen Kraftfahrzeugsitz, mit den Merkmalen des Oberbegriffs des Anspruches 1.

Aus der DE 102 06 303 A1 ist ein Beschlag für ein zweitüriges Kraftfahrzeug bekannt, welcher dazu dient, durch das vorwärts erfolgende Freischwenken der Lehne den Zugang zum Fond zu ermöglichen und für den Gebrauch durch einen Insassen verschiedene Neigungseinstellungen der Lehne zur Verfügung zu stellen. Für das Freischwenken der Lehne wird der Beschlag durch Schwenken eines Entriegelungspins in einer Kulisse entriegelt, wobei mittels einer Abdeckung dieser Kulisse einer Verschmutzung der Verriegelung vermieden wird. Um ein ungewolltes Zurückschwenken der Lehne, beispielsweise bei einer zu starken Polsterung im Übergangsbereich zwischen der Lehne und dem Sitzteil, zu verhindern, ist in der freigeschwenkten Stellung eine Sicherung der Lehne vorgesehen.

In der DE 102 35 349 A1 ist ein Beschlag der eingangs genannten Art offenbart, bei welchem die gleiche Klinke das dritte Beschlagteil sowohl in den Gebrauchsstellungen der Lehne verriegelt, indem sie mit einer Verzahnung am zweiten Beschlagteil zusammenwirkt, als auch in der freigeschwenkten Stellung der Lehne sichert, indem sie mit einer Schwinge verriegelt, welche am ersten Beschlagteil angelenkt ist. Eine Klinke mit zwei Verriegelungsbereichen, nämlich einem zum Verriegeln mit einem Vorsprung am zweiten Beschlagteil in den Gebrauchsstellungen und einem zum Verriegeln mit einem Haken am ersten Beschlagteil, ist in der DE 10012 009 A1 beschrieben.

Der Erfindung liegt die Aufgabe zu Grunde, einen Beschlag der eingangs genannten Art zu verbessern. Diese Aufgabe wird erfindungsgemäß durch einen Beschlag mit den Merkmalen des Anspruches 1 gelöst. Vorteilhafte Ausgestaltungen sind Gegenstand der Unteransprüche.

Indem die gleiche Klinke das dritte Beschlagteil sowohl in den Gebrauchsstellungen der Lehne verriegelt als auch in der freigeschwenkten Stellung der Lehne sichert, wird gegenüber einem Beschlag mit zwei Klinken sowohl die Anzahl der Bauteile als auch der benötigte Bauraum verringert. Die Klinke sichert das dritte Beschlagteil in der freigeschwenkten Stellung der Lehne durch Zusammenwirken mit einem Sicherungsring, welcher am zweiten Beschlagteil gelagert ist und insbesondere vom ersten Beschlagteil festgehalten oder gegen dieses gespannt wird. Mittels eines relativ zum Sicherungsring drehbaren Schaltrings wird bei einer Relativdrehung von Sicherungsring und Schaltring das Zusammenwirken der Klinke und des Sicherungsrings aufgehoben.

Um die Sicherung in der freigeschwenkten Stellung unabhängig von der eingestellten Neigung der Lehne vorzunehmen, sind vorzugsweise getrennte Bauteile zum Zusammenwirken mit der Klinke vorgesehen, nämlich der Sicherungsring und insbesondere ein fest mit dem zweiten Beschlagteil verbundenes Rastelement, welche aber für das direkte Zusammenwirken mit der Klinke jeweils einen Nocken oder eine Stufe oder dergleichen in ihrer jeweiligen Ebene oder in einer gemeinsamen Ebene aufweisen. Im Falle einer Anordnung in verschiedenen Ebenen weist die Klinke vorzugsweise für jede der beiden Ebenen einen eigenen Bereich zum Zusammenwirken auf, beispielsweise einen Zahn oder Finger.

Zum Verriegeln des dritten Beschlagteils in den Gebrauchsstellungen liegt die Klinke vorzugsweise mit Vorspannung an einem Rastanschlag des Rastelements an. Die Klinke ist vorzugsweise mittels eines als Exzenterbolzen ausgebildeten Lagerbolzens schwenkbar am dritten Beschlagteil gelagert. Der Lagerbolzen ist vorzugsweise so einstellbar und fixierbar, dass ein maximaler Klinkeneingriff gewährleistet ist.

Zum Sichern des dritten Beschlagteils in der freigeschwenkten Stellung hintergreift die Klinke beim Zusammenwirken mit dem Sicherungsring vorzugsweise einen Sicherungsnocken des Sicherungsrings, wobei die Klinke zum Zusammenwirken mit dem Sicherungsring hinter dem Sicherungsnocken vorzugsweise radial nach innen einfällt und beim Aufheben des Zusammenwirkens vorzugsweise radial nach außen ausgehoben wird.

Schwenkbare Pins, drehbare Schaltringe oder eine drehbare Entriegelungswelle können die Klinke oder deren Sicherungselemente wieder ausheben. Indem eine Entriegelüngswelle vorgesehen ist, deren Drehung um ihre eigene Achse die Klinke entriegelt, wird auf einfache Weise innerhalb des Beschlags ein relativ schmutzfreier Raum geschaffen. Eine Abdeckung, wie sie bei einem schwenkbaren Pin für die zugeordnete Kulisse benötigt wird, entfällt mit einer solchen Lösung. Die Klinke kann direkt mit der Entriegelungswelle ausgehoben werden. Vorzugsweise ist aber für die Spielfreistellung der Klinke ein Spannstück als Sicherungselement vorhanden und zur Verstärkung der Lastaufnahme im Crashfall vorzugsweise ein spezielles Fangstück als weiteres Sicherungselement zum Abstützen der Klinke vorgesehen. Die Entriegelungswelle schwenkt dann wenigstens eines dieser beiden Elemente von der Klinke weg. Das andere Element ist vorzugsweise mit einem Leerweg auf Mitnahme gekoppelt, so dass es letztendlich auch durch die sich drehende Entriegelungswelle von der Klinke weggeschwenkt wird, damit diese entriegelt.

Zur Verstärkung der Lastaufnahme im Crashfall kann kummulativ oder alternativ eine spezielle Fangklinke zum Abstützen am Rastelement vorgesehen sein. Die Fangklinke, die beispielsweise mittels eines Lagerbolzens schwenkbar am dritten Beschlagteil gelagert ist, gelangt in einem Crashfall vorzugsweise in Anlage an einen Anschlag des Rastelementes, ohne dass von diesem ein öffnendes Moment auf die Fangklinke ausgeübt wird. Die Klinke zum Verriegeln und Sichern des dritten Beschlagteils kann dann auf der Fangklinke oder dem Lagerbolzen der Fangklinke schwenkbar gelagert sein. Vorzugsweise spannt eine gemeinsame Feder sowohl die Fangklinke als auch die Klinke zum Verriegeln und Sichern des dritten Beschlagteils in die Schließrichtung vor. Die Klinke zum Verriegeln und Sichern des dritten Beschlagteils und die Fangklinke sind vorzugsweise mittels einer Schlitz-Zapfen-Führung gekoppelt.

Mittels des Schaltrings kann das durch den Beschlag erfolgende Sichern der Lehne bei Vorliegen bestimmter Bedingungen, beispielsweise einer bestimmten Sitzlängsposition, automatisch beendet werden; so dass die Lehne dann in ihre Ausgangsposition zurückgeschwenkt werden kann. Vorzugsweise hebt die Relativdrehung von Sicherungsring und Schaltring die vorzugsweise in radialer Richtung einfallende Klinke aus, wofür der Schaltring vorzugsweise einen Schaltnocken mit einer radial anwachsenden Flanke aufweist. Geeignete Anordnungen und Vorspannungen der Bauteile sorgen für eine klapperfreie Anlage der Bauteile. Vorzugsweise bestehen mehrere Möglichkeiten der Ansteuerung der Klinke, des Sicherungsrings und/oder des Schaltrings.

Vorzugsweise dreht die Klinke vor dem Hintergreifen des Sicherungsnockens den Schaltring um einen kleinen Winkel, und der Schaltring dreht aufgrund einer Vor - spannung zurück, wenn die Klinke den Sicherungsnocken hintergreift. Vorzugs - weise wird entweder der Sicherungsring oder der Schaltring relativ zum ersten Beschlagteil mit Spiel mittels eines relativ zum ersten Beschlagteil axial abstehenden Sperranschlags festgehalten, insbesondere indem zwei vom festgehaltenen Ring radial abstehende Sperrfinger den Sperranschlag zwischen sich aufnehmen. Der nicht festgehaltene der beiden Ringe ist vorzugsweise in eine Richtung gegen den Sperranschlag vorgespannt.

Der gegen den Sperranschlag vorgespannte Ring kann von einem schwenkbar gelagerteren Sperrhebel beaufschlagt werden, welcher außerhalb der Selbsthemmung an einem Anschlagsnocken des besagten Rings anliegt. Vorzugsweise beaufschlagt ein schwenkbar gelagerter und vorgespannter Spannhebel den Sperrhebel, wobei eine Spannkontur des einen Hebels an einem Sperrpin des anderen Hebels anliegt, ohne dass der Sperrhebel ein öffnendes Moment auf den Spannhebel ausübt.

Die Erfindung ist vorzugsweise bei längseinstellbaren Fahrzeugsitzen von zweitürigen Kraftfahrzeugen mit zentrischem Freischwenken der Lehne einsetzbar, kann aber auch für andere Fahrzeugsitze verwendet werden. Bei einer Verwendung des erfindungsgemäßen Beschlags zur Aktivierung der sogenannten "Easy-Entry-Funktion", bei welcher außer einem Freischwenken der Lehne noch ein Verfahren des Fahrzeugsitzes erfolgt, kann das Zurückschwenken der Lehne genau bei Erreichen der zuvor eingestellten Sitzlängsposition erfolgen.

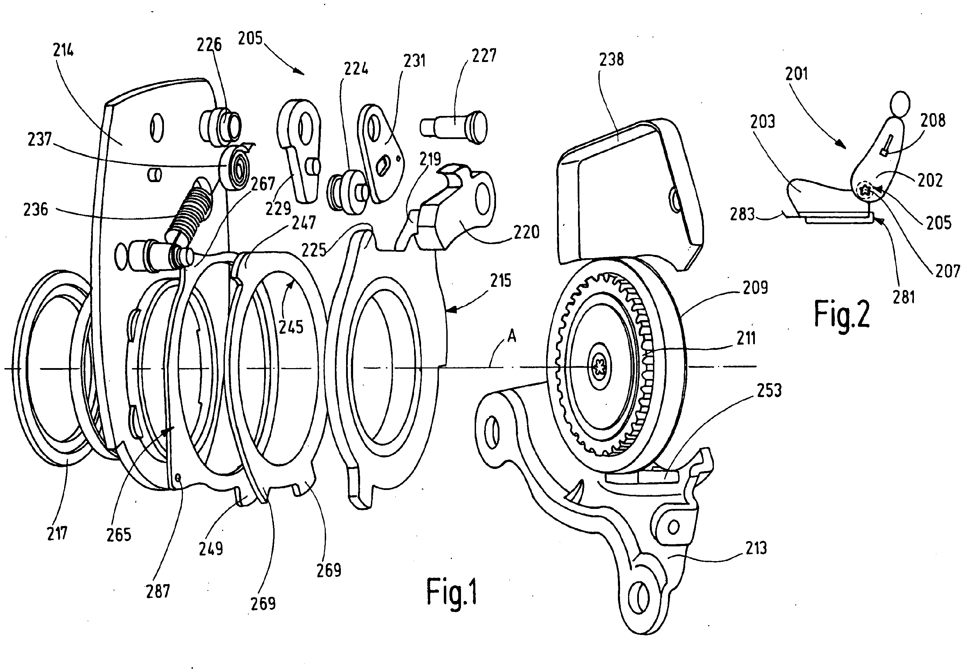

Im folgenden ist die Erfindung anhand mehrerer in der Zeichnung dargestellter Ausführungsbeispiele mit Abwandlungen näher erläutert. Es zeigen
- Fig. 1: eine Explosionsdarstellung des ersten Ausführungsbeispiels ohne Seilzüge, bei welcher die ganz rechts dargestellten Bauteile in einer anderen Perspek- tive gezeigt sind,
- Fig. 2: eine schematische Seitenansicht eines Fahrzeugsitzes,
- Fig. 3: eine Ansicht des für das Freischwenken relevanten Teils des ersten Ausfüh- rungsbeispiels in der Gebrauchsstellung der Lehne,
- Fig. 4: einen Schnitt entlang der Linie IV-IV in Fig. 3,
- Fig. 5: einen Schnitt entlang der Linie V-V in Fig. 3,
- Fig. 6: eine Teilansicht von Fig. 3 ohne Spannstück,
- Fig. 7: eine Ansicht entsprechend Fig. 3 in der freigeschwenkten Stellung der Lehne,

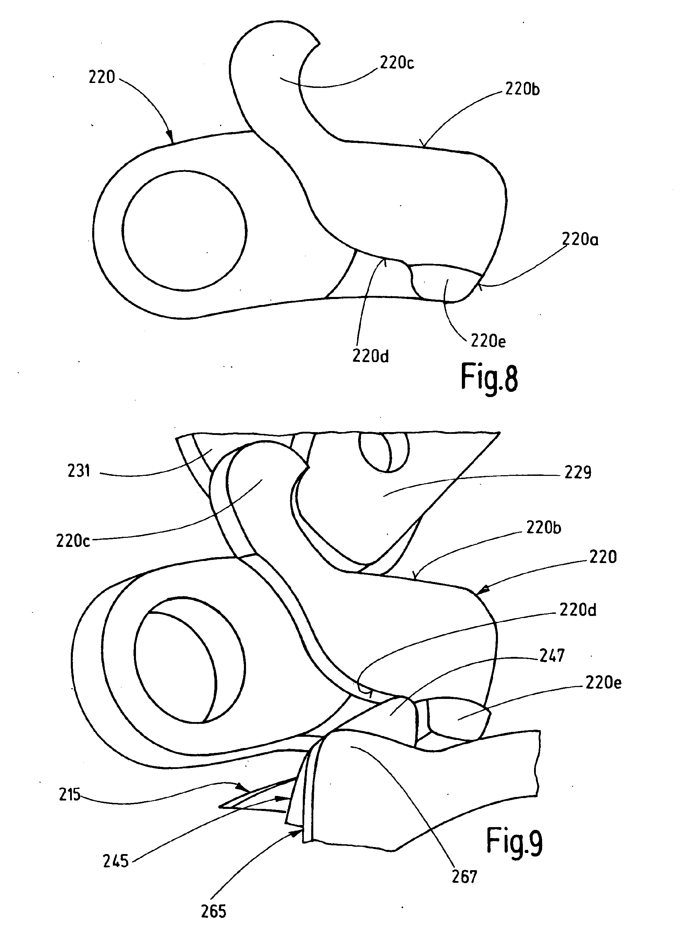

- Fig. 8: eine Ansicht der Rückseite der Klinke,
- Fig. 9: eine perspektives Teilansicht der ersten Ausführungsbeispiels in der freige- schwenkten Stellung der Lehne mit Blick auf die Rückseite der Klinke,
- Fig. 10: eine Abwandlung des Fangstücks,
- Fig. 11: eine Abwandlung des ersten Ausführungsbeispiels,
- Fig. 12: eine Ergänzung des ersten Ausführungsbeispiels,

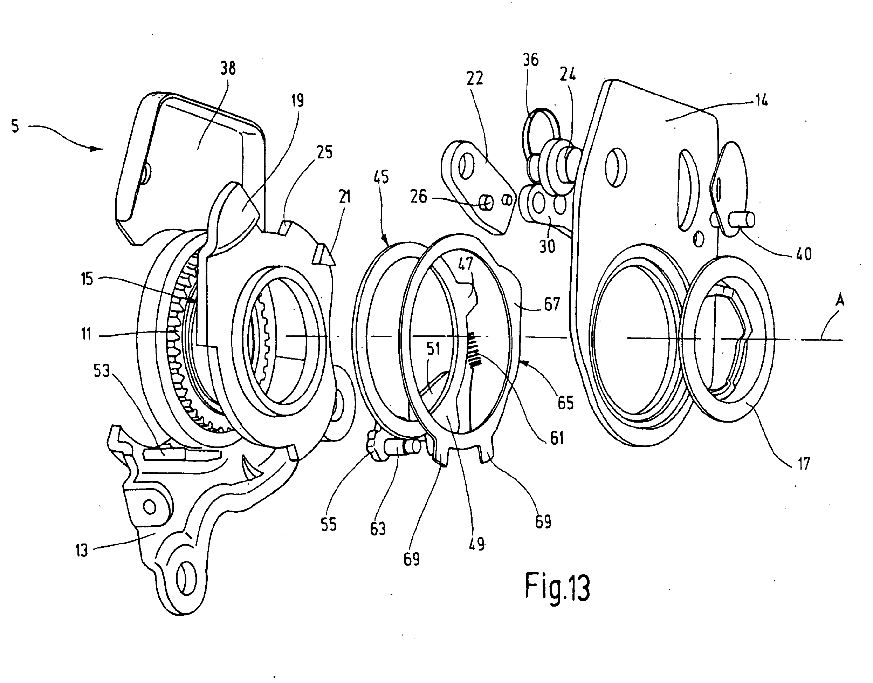

- Fig. 13: eine Explosionsdarstellung des zweiten Ausführungsbeispiels,
- Fig. 14: einen Schnitt durch das in einer Gebrauchsstellung befindliche zweite Aus- führungsbeispiel in einer Ebene senkrecht zur Achse,

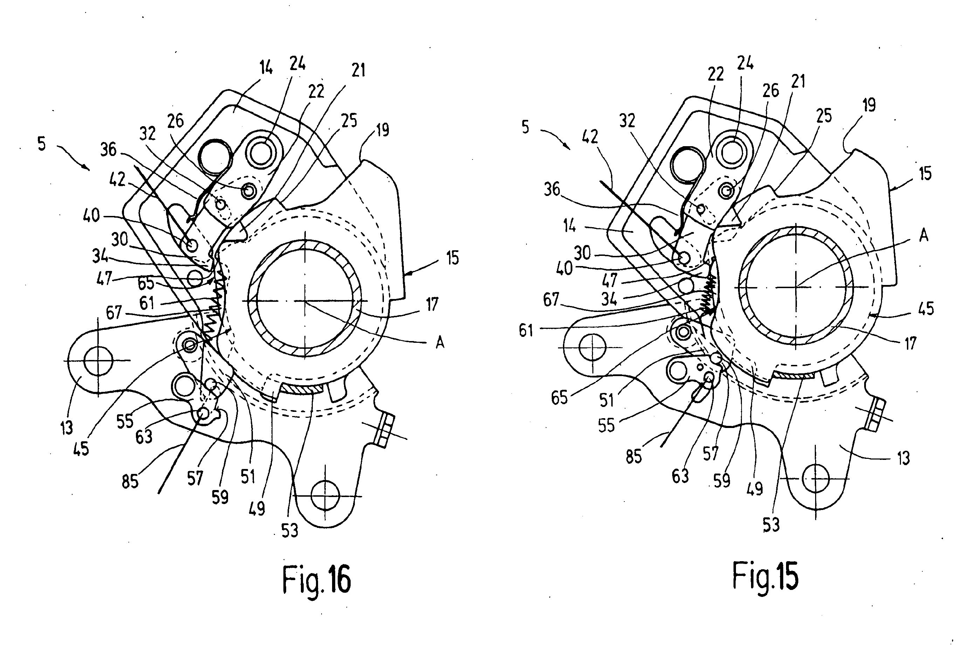

- Fig. 15: eine Darstellung entsprechend Fig. 14 in der freigeschwenkten Stellung,
- Fig. 16: eine Darstellung entsprechend Fig. 14 beim Entriegeln mittels des Längs- einstellers,

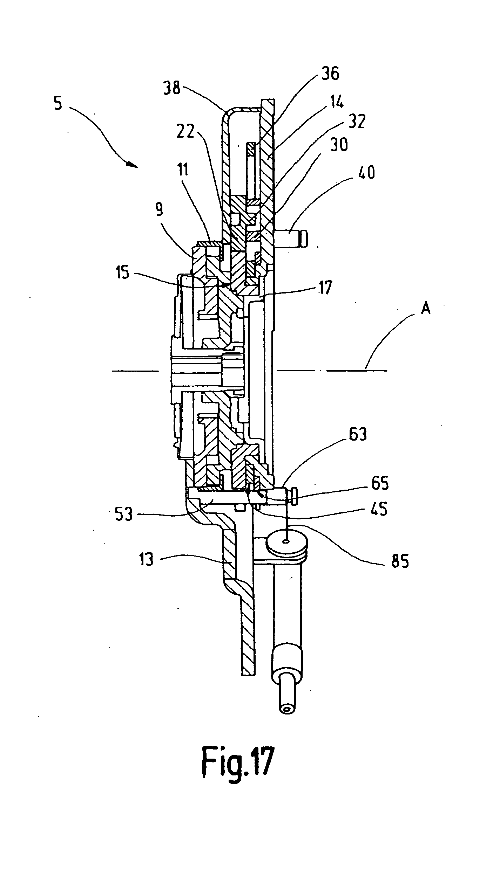

- Fig. 17: einen Schnitt durch das in einer Gebrauchsstellung befindliche zweite Aus- führungsbeispiel in einer Ebene entlang zur Achse,

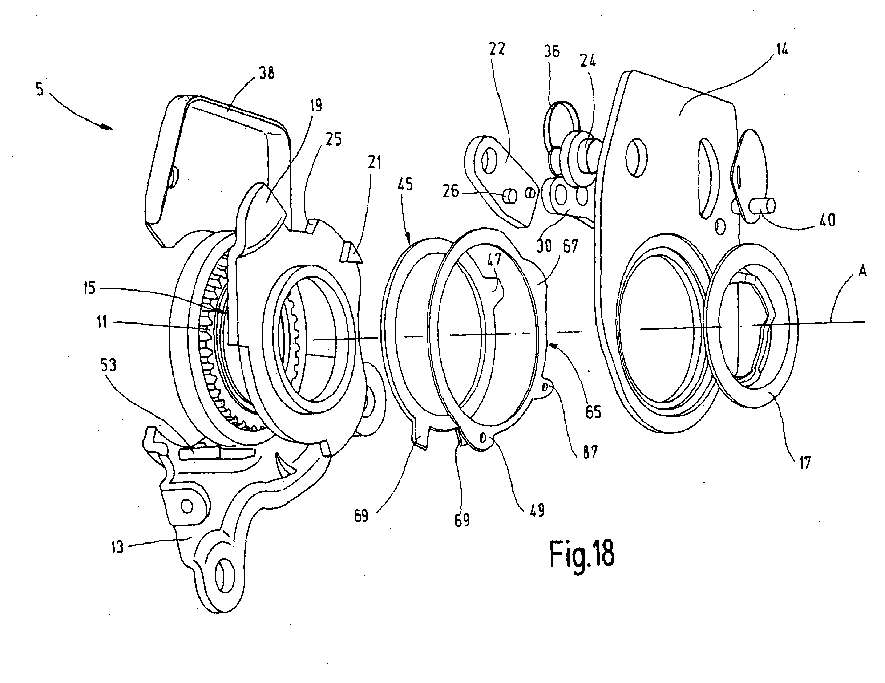

- Fig. 18: eine Explosionsdarstellung des dritten Ausführungsbeispiels,
- Fig. 19: einen Schnitt durch das in einer Gebrauchsstellung befindliche dritte Aus- führungsbeispiel in einer Ebene senkrecht zur Achse,

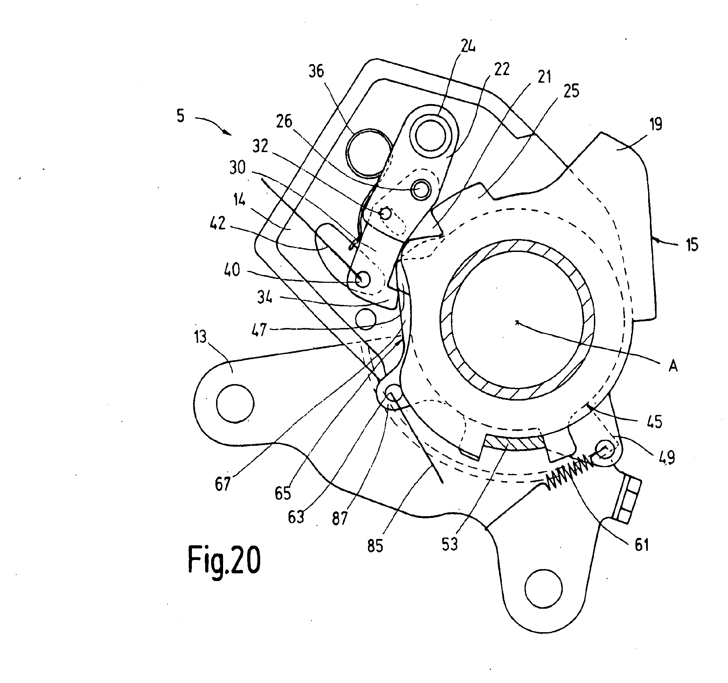

- Fig. 20: eine Darstellung entsprechend Fig. 19 in der freigeschwenkten Stellung,

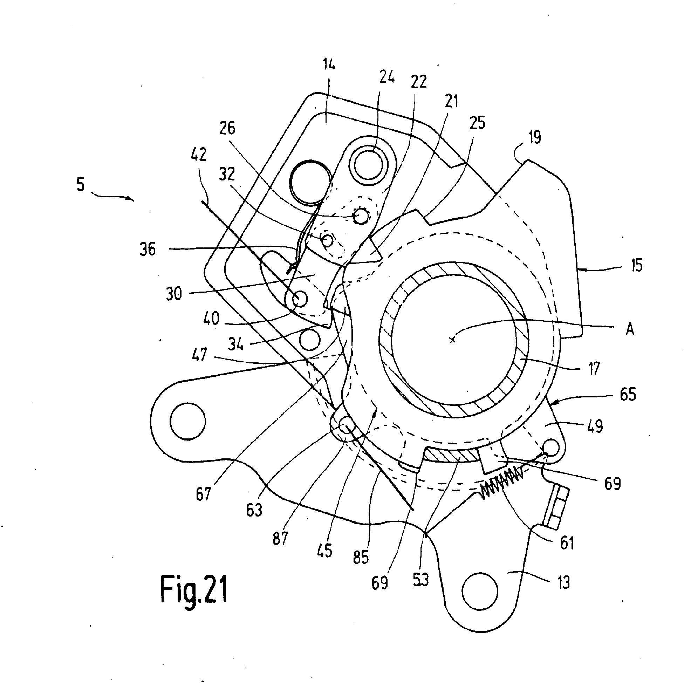

- Fig. 21: eine Darstellung entsprechend Fig. 19 beim Entriegeln mittels des Längs- einstellers,

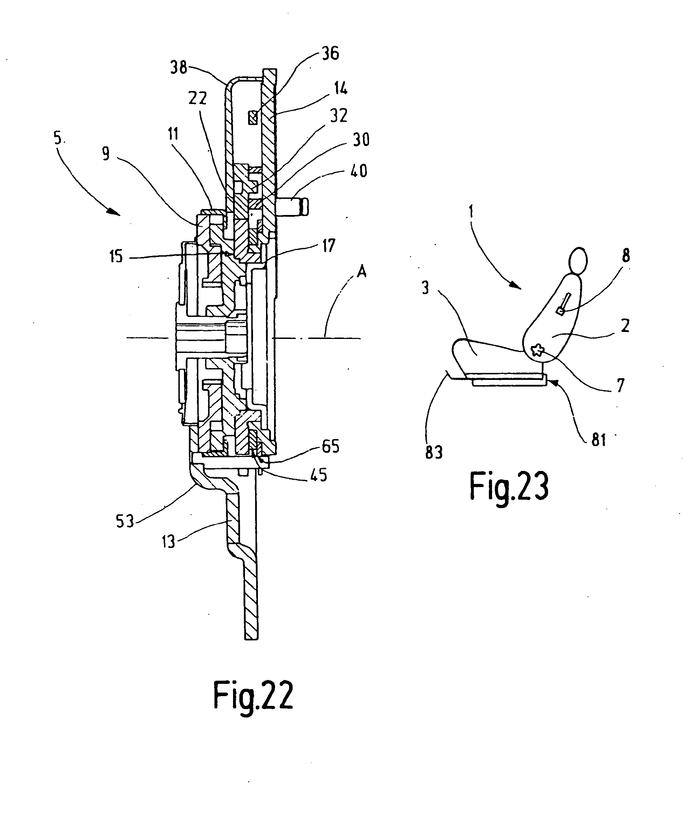

- Fig. 22: einen Schnitt durch das in einer Gebrauchsstellung befindliche dritte Aus- führungsbeispiel in einer Ebene entlang zur Achse, und
- Fig. 23: eine schematische Seitenansicht eines Fahrzeugsitzes.

Die Ausführungsbeispiele und Abwandlungen stimmen untereinander überein, soweit nicht abweichend beschrieben. Im ersten Ausführungsbeispiel weist ein Fahrzeugsitz 201 für ein zweitüriges Kraftfahrzeug für die Neigungseinstellung und das Freischwenken seiner Lehne 202 relativ zu seinem Sitzteil 203 auf seinen beiden Seiten je einen Beschlag 205 auf. Auf der Außenseite des Fahrzeugsitzes 201 ist für die Neigungseinstellfunktion an einem der Beschläge 205 ein Handrad 207 und zwischen beiden Beschlägen 205 eine mit dem Handrad 207 verbundene Welle vorgesehen, während für die Freischwenkfunktion an der Lehne 202 ein Handhebel 208 beweglich angebracht ist.

Jeder Beschlag 205 umfasst als Herz ein erstes Beschlagteil 209 und ein zweites Beschlagteil 211, welche in baulicher Hinsicht zusammen eine scheibenförmige Einheit bilden, wie sie beispielsweise in der DE 101 05 282 B4 beschrieben ist, deren Offenbarungsgehalt ausdrücklich einbezogen wird. Die beiden Beschlagteile 209 und 211 stehen im Ausführungsbeispiel mittels eines - vorliegend selbsthemmenden - Exzenterumlaufgetriebes miteinander in Getriebeverbindung, welches vorliegend ein spielfreies Feststellen der Beschlagteile 209 und 211 ermöglicht und zum Verstellen eine Relativdrehung der Beschlagteile 209 und 211 mit überlagerter Taumelbewegung erzwingt. Ein solcher Getriebebeschlag ist beispielsweise in der DE 44 36 101 A1 beschrieben, deren Offenbarungsgehalt ausdrücklich einbezogen wird. Es sind aber auch andere Getriebebeschläge und - theoretisch - auch Rastbeschläge einsetzbar.

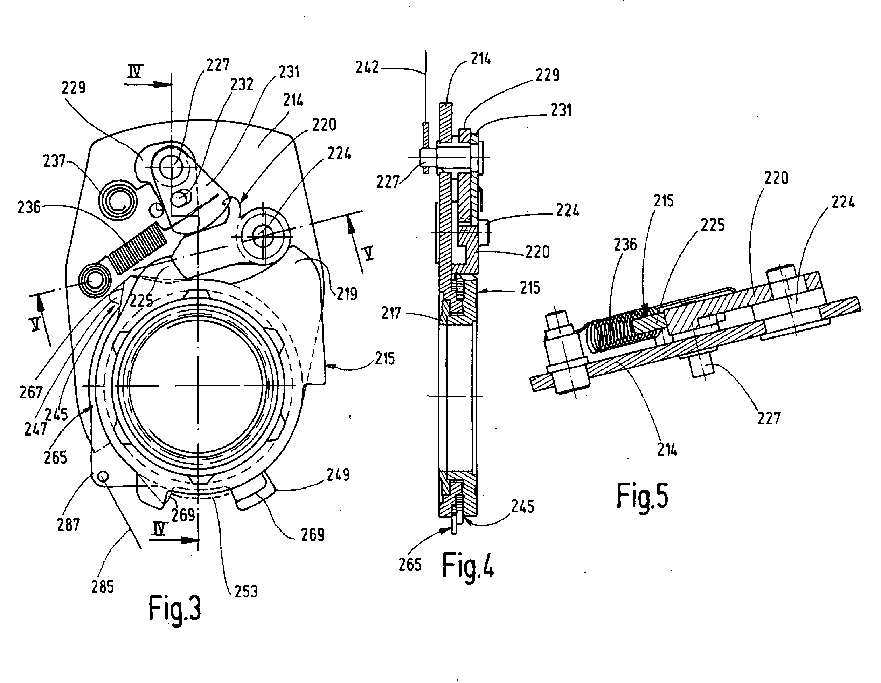

Das erste Beschlagteil 209 ist mit der Struktur des Sitzteils 203 verbunden ("sitzteilfest"), indem ein sitzteilfest angebrachter Adapter 213 am ersten Beschlagteil 209 befestigt ist. Jeder Beschlag 205 umfasst ferner ein drittes Beschlagteil 214, welches mit der Lehnenstruktur der Lehne 202 verbunden ("lehnenfest") ist. Das plattenförmige dritte Beschlagteil 214 ist am zweiten Beschlagteil 211 auf der vom ersten Beschlagteil 209 abgewandten Seite gelagert und für das zentrisch erfolgende Freischwenken relativ zum zweiten Beschlagteil 211 um eine zentrale Achse A verschwenkbar, ansonsten aber mit dem zweiten Beschlagteil 211 verriegelt. Die Achse A und ihre Lage innerhalb des Fahrzeugsitzes 201 definieren die vorliegend verwendeten Richtungsangaben. Im folgenden sind zunächst die Verhältnisse in einer zum Sitzgebrauch geeigneten Gebrauchsstellung (Fig. 3) der Lehne 202 beschrieben, wobei der vorliegend verwendete Getriebebeschlag mehrere mögliche Gebrauchsstellungen definiert.

Ein ringförmiges Rastelement 215 am zweiten Beschlagteil 211 dient der Lagerung des dritten Beschlagteils 214. Das Rastelement 215 ist mittels einer Laserschweißnaht (oder auf andere Weise) mit dem zweiten Beschlagteil 211 fest verbunden. Eine ringförmige Befestigungscheibe 217, welche das dritte Beschlagteil 214 im Lagerbereich übergreift, ist zur axialen Sicherung des letzteren mit dem zweiten Beschlagteil 211 und dem Rastelement 215 fest verbunden. Zum Verriegeln des dritten Beschlagteils 214 in der Gebrauchsstellung weist das Rastelement 215 einen angeformten, ersten Rastanschlag 219 auf.

Eine Klinke 220 ist mittels eines Lagerbolzens 224 schwenkbar am dritten Beschlagteil 214 auf der dem zweiten Beschlagteil 211 zugewandten Seite gelagert. Der Lagerbolzen 224 dient zugleich als Anschlag zum Zusammenwirken mit dem ersten Rastanschlag 219, d.h. er begrenzt in der Gebrauchsstellung die Schwenkbewegung des dritten Beschlagteils 214 nach hinten, und zwar sowohl im Normalfall als auch im (Heck-)Crashfall. Zum Verriegeln und zur Begrenzung der Schwenkbe - wegung des dritten Beschlagteils 214 nach vorne im (Front-)Crashfall ist in radialer Verlängerung der Klinke 220 am Rastelement 215 ein zweiter Rastanschlag 225 vorgesehen. Der Lagerbolzen 224 ist als Exzenterbolzen ausgebildet, d.h. er ist um eine zur Schwenkachse der Klinke 220 versetzte Achse im dritten Beschlagteil 214 relativ zu diesem drehbar gelagert. Zum Ausgleich der Fertigungstoleranzen und für einen maximalen Klinkeneingriff ist der Lagerbolzen 224 so eingestellt und fixiert, dass die Klinke 220 mit einem Verriegelungsbereich 220a spielfrei am zweiten Rastanschlag 225 anliegt, allerdings außerhalb des Winkelbereichs der Selbsthemmung. Der Tangens dieses Anlagewinkels kann beispielsweise 0,25 betragen.

Parallel zum Lagerbolzen 224 ist im dritten Beschlagteil 214 mittels einer Lagerbuchse 226 eine Entriegelungswelle 227 drehbar gelagert, auf welcher schwenkbar ein Fangstück 229 und drehfest ein Spannstück 231 sitzt. In abgewandelter Ausführung sitzt das Fangstück 229 drehfest und das Spannstück 231 schwenkbar auf der Entriegelungswelle 227. Das Fangstück 229 und das Spannstück 231 sind um die durch die Entriegelungswelle 227 definierte gemeinsame Achse schwenkbar und bei verriegeltem dritten Beschlagteil 214 auf die Klinke 220 ausgerichtet. Die Funktionsweise von Fangstück 229 und Spannstück 231 ist in der DE 44 39 644 A beschrieben, deren Offenbarungsgehalt ausdrücklich einbezogen wird.

Das Spannstück 231 liegt mit einer exzentrisch zur Entriegelungswelle 227 gekrümmten Spannfläche in einem Winkel außerhalb des Selbsthemmungsbereichs an einer Anlagefläche 220b der Klinke 220 an. Der Tangens dieses Anlagewinkels kann beispielsweise 0,11 betragen. Das Spannstück 231 wird von einer als Schrauben-Zugfeder ausgebildeten Spannfeder 236 beaufschlagt, so dass das Spannstück 231 mit Vorspannung an der Klinke 220 anliegt. Dadurch ist das dritte Beschlagteil 214 spielfrei mit dem Rastelement 215 und damit mit dem zweiten Beschlagteil 211 verriegelt.

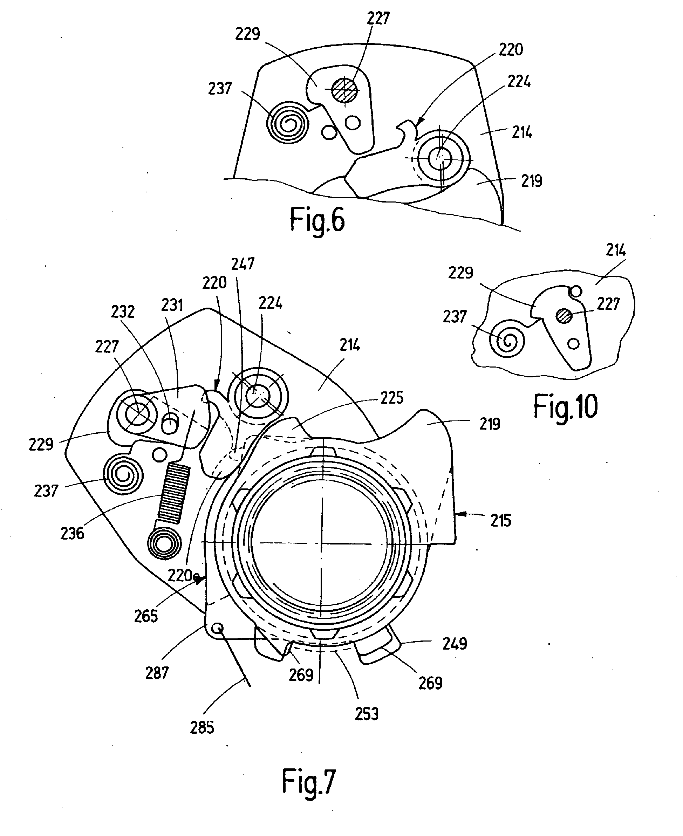

Das Fangstück 229 wird von einer Spiralfeder 237 beaufschlagt und liegt an einem Anschlag des dritten Beschlagteils 214 an. Im Normalfall, d.h. für den normalen Sitzgebrauch in der Gebrauchsstellung, wird die Klinke 220 durch das Spannstück 231 in ihrer Position gehalten, und das Fangstück 229 ist in geringem Abstand zur Klinke 220 angeordnet (Fig. 6). Im Crashfall, wenn Crashkräfte auf die Klinke 220 wirken, kann das Spannstück 231 wegen der fehlenden Selbsthemmung öffnen. Nach einer geringfügigen Schwenkbewegung der Klinke 220 gelangt diese in Anlage an das Fangstück 229, vorzugsweise mit der Anlagefläche 220b. Das Fang - stück 229 stützt dann die Klinke 220 ab, welche innerhalb des Selbsthemmungsbereichs am Fangstück 229 anliegt, vorzugsweise tangential oder konzentrisch und möglichst flächig. Damit wird verhindert, dass die Klinke 220 öffnet. Der Tangens des Anlagewinkels ist vorzugsweise null. In Fig. 10 ist eine Abwandlung des Fang - stücks 229 dargestellt, welche mit einem bezüglich der Entriegelungswelle 227 versetzten Anschlag des dritten Beschlagteils 214 zusammenwirkt und hierfür eine radial vorspringende Materialpartie aufweist.

Das Fangstück 229 und das Spannstück 231 sind miteinander mittels einer Schlitz-Zapfen-Führung 232 mit einem Leerweg auf Mitnahme gekoppelt. Hierfür weist das Spannstück 231 einen um die Entriegelungswelle 227 gekrümmten Schlitz auf, in welchen ein Zapfen des Fangstücks 229 greift. Ein am dritten Beschlagteil 214 befestigter Deckel 238 deckt die Klinke 220 samt Lagerbolzen 224, das Fangstück 229, das Spannstück 231 und die Federn 236 und 237 ab und schützt diese vor Verschmutzung.

Auf der vom zweiten Beschlagteil 211 abgewandten Seite des dritten Beschlagteils 214 ist mit der Entriegelungswelle 227 ein Arm oder Hebel drehfest verbunden, an welchem ein mit dem Handhebel 208 in Wirkverbindung stehender erster Seilzug 242 befestigt ist. Alternativ kann die Entriegelungswelle 227 auch über einen elektrischen Aktuator, beispielsweise einen Stellmotor oder dergleichen, betätigt werden.

Durch Entriegeln des dritten Beschlagteils 214 und Vorschwenkens der Lehne 202 geht die Lehne 202 von der Gebrauchsstellung in eine freigeschwenkte Stellung über. Zum Entriegeln des dritten Beschlagteils 214 wird mittels des ersten Seilzugs 242 die Entriegelungswelle 227 um ihre eigene Achse gedreht. Die Entriegelungswelle 227 nimmt das drehfest mir ihr verbundene Element, vorliegend das Spannstück 231, mit und öffnet, d.h. trennt und/oder entfernt es von der Klinke 220. Dabei nimmt das betreffende Element, also vorliegend das Spannstück 231, mittels der Schlitz-Zapfen-Führung 232 das jeweils andere Element, also vorliegend das Fangstück 229, mit, um die Klinke 220 freizugeben. Das schwenkende Fangstück 229 kommt in Anlage an einen - im wesentlichen radial abstehenden - Entriegelungsfinger 220c der Klinke 220 und zieht diese dadurch auf. Die Klinke 220 ist damit vollständig geöffnet.

Auf wenigstens einer Fahrzeugsitzseite (oder beiden Fahrzeugsitzseiten) ist der Beschlag 205 so ausgebildet, dass auf einem Absatz des dritten Beschlagteils 214 (oder wahlweise dem Rastelement 215 oder dem zweiten Beschlagteil 211) konzentrisch zur Achse A ein Sicherungsring 245 drehbar gelagert ist, welcher in axialer Richtung zwischen dem Rastelement 215 und dem dritten Beschlagteil 214 angeordnet ist. Der Sicherungsring 245 weist einen Sicherungsnocken 247 auf, welcher radial nach außen abstehend angeordnet ist. Der Sicherungsring 245 mit dem Sicherungsnocken 247 ist zum Festlegen des dritten Beschlagteils 214 in der freigeschwenkten Stellung der Lehne 202 vorgesehen, wozu er mit der Klinke 220 zusammenwirkt. Die Klinke 220 weist hierfür eine Sicherungskontur 220d auf, mit welcher die Klinke 220 den Sicherungsnocken 247 hintergreifen kann. Bezüglich des Verriegelungsbereichs 220a der Klinke 220 befindet sich die Sicherungskontur 220d in einer axial dazu versetzten Ebene. Der Sicherungsring 245 weist außer dem Sicherungsnocken 247 noch zwei radial nach außen abstehende Sperrfinger 269 auf, die zwischen sich mit Spiel einen parallel zur Achse A abstehenden Sperranschlag 253 des Adapters 213 aufnehmen, wodurch der Sicherungsring 245 festgehalten wird. Das Spiel gleicht bei der Neigungseinstellung der Lehne 202 den Einfluss der Taumelbewegung auf die Position des Sicherungsrings 245 aus.

In einer der Lagerung des Sicherungsrings 245 entsprechenden Weise ist auf einem weiteren Absatz des dritten Beschlagteils 214 konzentrisch zur Achse A ein Schaltring 265 drehbar gelagert. Der Schaltring 265 ist in axialer Richtung zwischen dem Sicherungsring 245 und dem dritten Beschlagteil 214 angeordnet, wobei die axiale Abmessung der Klinke 220 der Summe der axialen Abmessung des Schaltrings 265 plus der axialen Abmessung des Sicherungsrings 245 plus der axialen Abmessung des Rastelements 215 entspricht. Der Schaltring 265 weist einen radial nach außen abstehenden Schaltnocken 267 auf, welcher in Umfangsrichtung in einem Winkelbereich zwischen dem zweiten Rastelement 225 und dem Sicherungsnocken 247 angeordnet ist und eine in Rückwärtsschwenkrichtung der Lehne 202 radial anwachsende Flanke aufweist. Zum Zusammenwirken mit dem Schaltnocken 267 weist die Klinke 220 einen Schaltfinger 220e auf, welcher im wesentlichen axial von der Klinke absteht. Bezüglich des Verriegelungsbereichs 220a und der Sicherungskontur 220d erstreckt sich der Schaltfinger 220e bis in eine axial dazu versetzte Ebene. Der Schaltring 265 weist außer dem Schaltnocken 267 noch einen Anschlagsnocken 249 auf, welcher ebenfalls radial nach außen absteht. Zwischen dem Anschlagsnocken 249 und dem Adapter 213 wirkt eine Zugfeder, welche den Schaltring 245 bezüglich der Achse A in Umfangsrichtung beaufschlagt. Diese Vorspannung hält den Anschlagsnocken 249 in Anlage an den Sperr - anschlag 253.

Der Fahrzeugsitz 201 ist mittels eines Längseinstellers 281 längseinstellbar, d.h. in der Sitzlängsposition einstellbar. Der zwei Sitzschienenpaare aufweisende Längseinsteller 281 ist hierfür mittels eines Griffs 283 entriegelbar und verriegelt selbsttätig nach Loslassen des Griffs 283. Der Längseinsteller 281 wird aber auch beim Freischwenken der Lehne 202 mittels des Handhebels 208 entriegelt, so dass der Fahrzeugsitz 201 (mittels des Längseinstellers 281) nach vorne verfahrbar ist, um zusätzlich zum Freischwenken der Lehne 202 den Zugang zum Fond zu erleichtern. Das Entriegeln des Längseinstellers 281 erfolgt dabei direkt mittels des Handhebels 208 oder indirekt, indem beim Beschlag 205 auf der Fahrzeugsitzseite ohne Sicherungsring 245 in an sich bekannter Weise ein Entriegelungsring vorsehen ist, welcher beim Vorschwenken der Lehne 202 mitgenommen wird und dann mittels eines Bowdenzugs oder dergleichen die Verriegelung des Längseinstellers 281 an - steuert.

Eine Memoryvorrichtung des Längseinstellers 281, mittels welcher die vor dem Freischwenken eingestellte Sitzlängsposition (Memory-Position) auffindbar ist, steht mittels zweiten Seilzugs 285, vorzugsweise eines Bowdenzugs, in Wirkverbindung mit dem Beschlag 205. Der Schaltring 265 weist hierfür zwischen dem Schaltnocken 267 und dem Anschlagsnocken 249 einen radial abstehenden Auslösefinger 287 auf. An diesem Auslösefinger 287 ist der zweite Seilzug 285 befestigt, beispielsweise an einem vom Auslösefinger 287 axial abstehenden Auslösepin, d.h. die Memoryvorrichtung des Längseinstellers 281 steuert den Schaltring 265 an.

Das Freischwenken der Lehne 202 wird durch das Entriegeln des dritten Beschlagteils 214 auf beiden Fahrzeugsitzseiten eingeleitet. Die Klinke 220 wird auf die zuvor beschriebene Weise radial aus dem zweiten Rastanschlag 225 des Rastelementes 215 des zweiten Beschlagteils 211 ausgehoben. Mit der Schwenkbewegung der Lehne 202 nach vorne gelangt das freie Ende der Klinke 220 nacheinander und in den verschiedenen Ebene mit dem Verriegelungsbereich 220a auf die radial nach außen weisende Seite des zweiten Rastanschlags 225, mit dem Schaltfinger 220d auf diejenige des Schaltnockens 267 und mit der Sicherungskontur 220d auf diejenige des Sicherungsnockens 247. Nach dem Passieren des Sicherungsnockens 247 springt die Außenkontur des Sicherungsrings 245 radial zurück. Durch die Form der Sicherungskontur 220d fällt die Klinke 220 nun hinter dem Sicherungsnocken 247 (radial nach innen) ein und hintergreift diesen mit der Sicherungskontur 220d (Fig. 7). Das dritte Beschlagteil 214 ist damit gesichert. Die Klinke 220 wird in dieser Position je nach nach Ausführung durch eine Federvorspannung oder durch Selbsthemmung gehalten, wobei dann allerdings das Spannstück 231 und das Fangstück 229 die Klinke 220 nicht sichern. In einer Ausführung ohne Schaltring 265 kann die Klinke 220 aber durch das Spannstück 231 und das Fangstück 229 in der besagten Position gesichert werden.

Die vorgeschwenkte Lehne 202 befindet sich nun in ihrer freigeschwenkten Stellung, welche einen ungehinderten Zugang zum Fond erlaubt und durch das Festlegen des dritten Beschlagteils 214 gesichert ist. Zugleich befindet sich der Fahrzeugsitz 201 in einer vorderen Sitzlängsposition. Da die Winkelposition des Sicherungsnockens 247 (bis auf eine sehr geringe oszillierende Bewegung als Projektion der Taumelbewegung) konstant ist bezüglich der Winkelposition des ersten Be - schlagteils 209 und des Adapters 213 samt Sperranschlag 253, wird das dritte Beschlagteil 214 - und damit die Lehne 202 - immer in der gleichen Position relativ zum ersten Beschlagteil 209 - und damit zum Sitzteil 203 - gesichert, also unabhängig von der eingestellten Neigung der Lehne 2.

Um in die Ausgangsstellung zurückzukehren, wird zunächst der Fahrzeugsitz 201 wieder nach hinten verfahren, beispielsweise durch Zug an der Lehne 2. Wenn die Memory-Position erreicht ist, verriegelt der Längseinsteller 281 und zieht dabei am zweiten Seilzug 285. Der am Auslösefinger 287 angreifende zweite Seilzug 285 dreht nun den Schaltring 265 entgegen dessen Vorspannung in die Vorwärts - schwenkrichtung der Lehne 202. Die Klinke 220, genauer gesagt ihr Schaltfinger 220e, gelangt auf die radial anwachsende Flanke des (sich bewegenden) Schaltnockens 267 des Schaltrings 265. Dadurch wird - mit der fortschreitenden Schwenkbewegung des Schaltrings 265 - die Klinke 220 in radialer Richtung nach außen ausgehoben, also das Zusammenwirken von Klinke 220 und Sicherungsring 245 aufgehoben, und die Lehne 202 kann ungehindert zurückgeschwenkt werden. Die Klinke 220 gelangt dann über den Sicherungsnocken 247 und den zweiten Rastanschlag 225 und fällt bei Erreichen der Ausgangsstellung mit ihrem Verriegelungs - bereich 220a wieder hinter dem zweiten Rastanschlag 225 (radial nach innen) ein, so dass der Beschlag 205 wieder verriegelt ist. Der vom zweiten Seilzug 285 nicht weiter beaufschlagte Schaltring 265 wird von der zugeordneten Zugfeder wieder in seine Ausgangsposition zurückgezogen.

In einer abgewandelten Ausführung ohne Schaltring 265, bei welcher die Klinke 220 in der freigeschwenkten Stellung der Lehne 202 durch das Spannstück 231 und das Fangstück 229 gesichert ist, erfolgt eine Freigabe der hinter dem Sicherungsnocken 247 eingefallenen Klinke 220 durch ein Betätigen des Handhebels 208. Dies ist auch möglich, wenn die Memory-Position nicht erreicht wird, beispielsweise aufgrund von Gegenständen im Fußraum, d.h. es ist dann auch eine Reset-Funktion verwirklicht.

Während im ersten Ausführungsbeispiel der Sicherungsring 245 quasi drehfest ist und der Schaltring 265 drehbar ist und von einer Feder gehalten wird, sind Abwandlungen hierzu möglich, gemäß welchen der Schaltring 265 quasi drehfest ist und der Sicherungsring 245 drehbar ist und auf geeignete Weise gehalten (festgesetzt) wird.

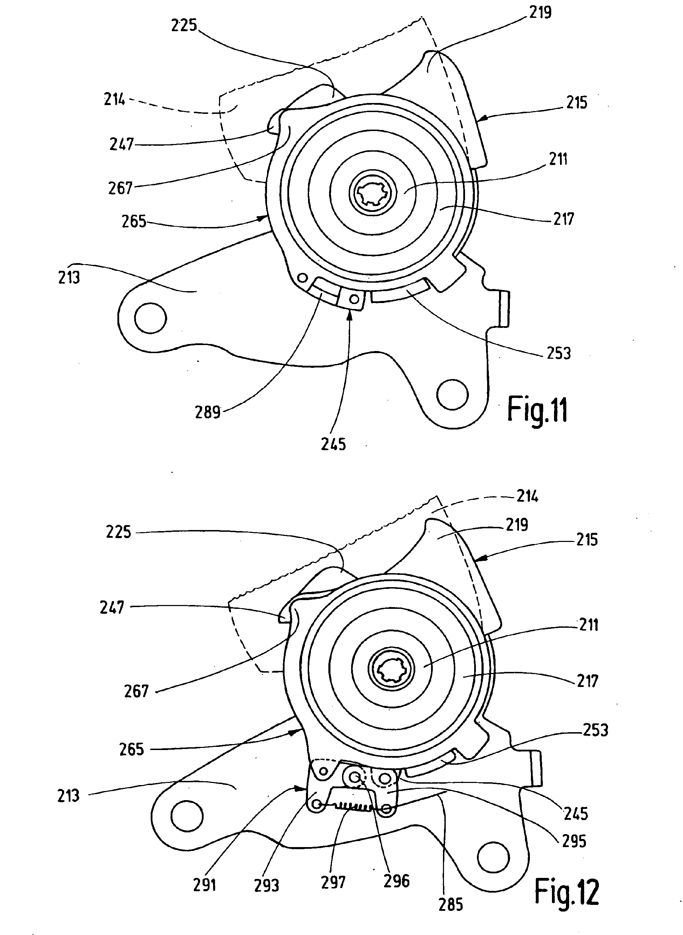

Eine derartige Abwandlung des ersten Ausführungsbeispiels ist in Fig. 11 mit einem in Umfangsring wirkenden Puffer 289 zwischen dem quasi drehfesten Schaltring 265 und dem Sicherungsring 245 dargestellt. Der Puffer 289 ist ein Körper, welcher elastisch zusammengedrückt werden kann, beispielsweise ein Stück Gummi. Anstelle des Puffers 289 kann auch eine Feder oder ein anderes elastisches Element verwendet werden. Eine solche Ausbildung, die insbesondere für Fahrzeugsitze 201 ohne memorisierten Längseinsteller 281 interessant ist, erlaubt in der freigeschwenkten Stellung ein gezieltes Entsichern der Lehne 202 durch Beaufschlagen der Lehne 202, beispielsweise am Lehnenkopf, mittels einer ein rückschwenkendes Moment ausübenden Kraft, indem mittels Schwenken des dritten Beschlagteils 214 nach hinten die Klinke 220 und der Sicherungsring 245 - unter Zusammendrücken des Puffers 289 - entlang des Schaltnockens 267 des Schaltrings 265 gezogen werden können, bis die Klinke 220 öffnet.

Für eine Ergänzung des ersten Ausführungsbeispiels ist der Sicherungsring 245 ebenfalls quasi drehfest, d.h. mittels der Sperrfinger 269 festgehalten. Der Schaltring 265 ist mittels eines Kniehebels 291 am Sicherungsring 245 festgesetzt, wie in Fig. 12 dargestellt. Der Kniehebel 291 besteht aus einem am Schaltring 265 angelenkten ersten Hebel 293 und einem am Sicherungsring 245 angelenkten zweiten Hebel 295, welche mittels eines Verbindungsgelenks 296 miteinander gelenkig verbunden sind und durch eine zwischen den beiden Hebeln 293 und 295 wirksame Kniehebelfeder 297 in einer Strecklage gehalten werden. Der zweite Seilzug 285 ist am zweiten Hebel 295 eingehängt und zur Memoryvorrichtung des Längseinstellers 281 geführt. Bei der Rückkehr von der freigeschwenkten Stellung in die Ausgangsstellung zieht die Memoryvorrichtung bei Erreichen der Memory-Position am zweiten Seilzug 285, welche den Kniehebel 291 - entgegen der Kraft der Kniehebelfeder 297 - in eine geknickte Lage bringt. Dadurch wird der Schaltring 265 relativ zum Sicherungsring 245 verdreht und die Klinke 220 wird mittels des Schaltnockens 267 geöffnet, so dass die Lehne 202 in die Gebrauchsstellung zurückgeschwenkt werden kann.

In allen weiteren Ausführungsbeispielen weist ein Fahrzeugsitz 1 für ein zweitüriges Kraftfahrzeug für die Neigungseinstellung und das Freischwenken seiner Lehne 2 relativ zu seinem Sitzteil 3 auf seinen beiden Seiten je einen Beschlag 5 auf. Auf der Außenseite des Fahrzeugsitzes 1 ist für die Neigungseinstellfunktion an einem der Beschläge 5 ein Handrad 7 und zwischen beiden Beschlägen 5 eine mit dem Handrad 7 verbundene Welle vorgesehen, während für die Freischwenk - funktion an der Lehne 2 ein Handhebel 8 beweglich angebracht ist.

Jeder Beschlag 5 umfasst als Herz ein erstes Beschlagteil 9 und ein zweites Beschlagteil 11, welche in baulicher Hinsicht zusammen eine scheibenförmige Einheit bilden. Die beiden Beschlagteile 9 und 11 stehen im Ausführungsbeispiel mittels eines - vorliegend selbsthemmenden - Exzenterumlaufgetriebes miteinander in Getriebeverbindung, welches vorliegend ein spielfreies Feststellen der Beschlagteile 9 und 11 ermöglicht und zum Verstellen eine Relativdrehung der Beschlagteile 9 und 11 mit überlagerter Taumelbewegung erzwingt. Ein solcher Getriebebeschlag ist beispielsweise in der DE 44 36 101 A1 beschrieben, deren Offenbarungsgehalt ausdrücklich einbezogen wird. Es sind aber auch andere Getriebebeschläge und - theoretisch - auch Rastbeschläge einsetzbar.

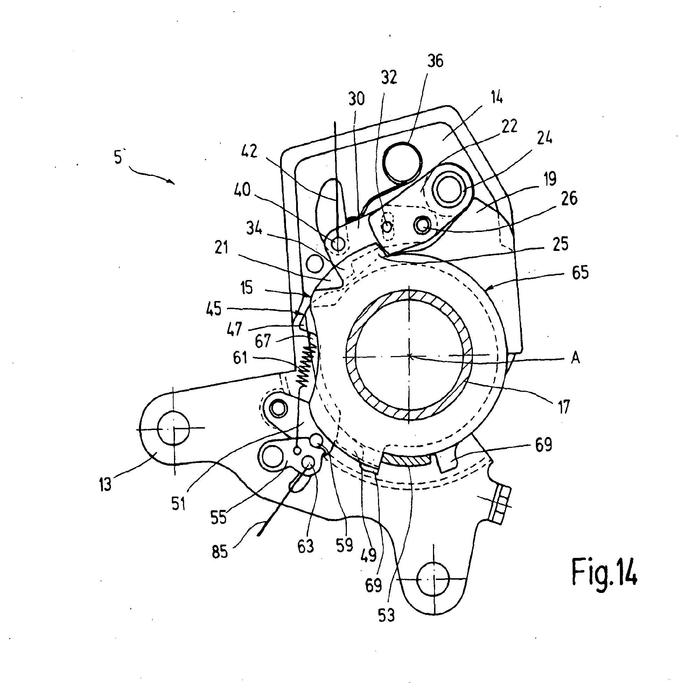

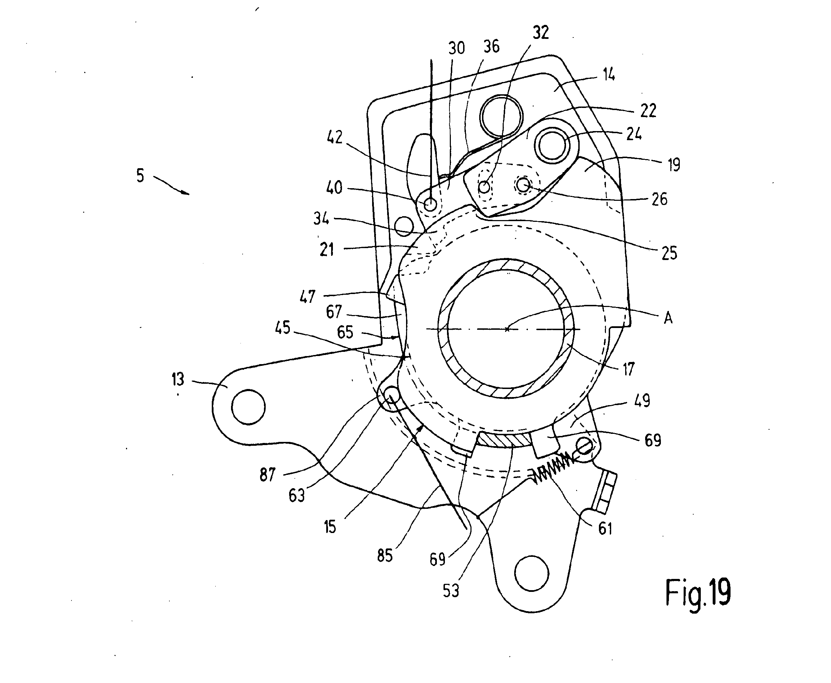

Das erste Beschlagteil 9 ist mit der Struktur des Sitzteils 3 verbunden ("sitzteilfest"), indem ein sitzteilfest angebrachter Adapter 13 am ersten Beschlagteil 9 befestigt ist. Jeder Beschlag 5 umfasst ferner ein drittes Beschlagteil 14, welches mit der Lehnenstruktur der Lehne 2 verbunden ("lehnenfest") ist. Das plattenförmige dritte Beschlagteil 14 ist am zweiten Beschlagteil 11 auf der vom ersten Beschlagteil 9 abgewandten Seite gelagert und für das zentrisch erfolgende Freischwenken relativ zum zweiten Beschlagteil 11 um eine zentrale Achse A verschwenkbar, ansonsten aber mit dem zweiten Beschlagteil 1 verriegelt. Die Achse A und ihre Lage innerhalb des Fahrzeugsitzes 1 definieren die vorliegend verwendeten Richtungsangaben. Im folgenden sind zunächst wieder die Verhält - nisse in einer zum Sitzgebrauch geeigneten Gebrauchsstellung (Fig. 14, 19) der Lehne 202 beschrieben, wobei der vorliegend verwendete Getriebebeschlag mehrere mögliche Gebrauchsstellungen definiert.

Im zweiten und dritten Ausführungsbeispiel dient ein ringförmiges Rastelement 15 am zweiten Beschlagteil 11 der Lagerung des dritten Beschlagteils 14. Das Rastelement 15 ist mittels einer Laserschweißnaht (oder auf andere Weise) mit dem zweiten Beschlagteil 11 fest verbunden. Eine ringförmige Befestigungscheibe 17, welche das dritte Beschlagteil 14 im Lagerbereich übergreift, ist zur axialen Sicherung des letzteren mit dem zweiten Beschlagteil 11 und dem Rastelement 15 fest verbunden.

Zum Verriegeln des dritten Beschlagteils 14 weist das Rastelement 15 außer einem angeformten, ersten Rastanschlag 19 noch eine Raststufe 21 auf. Die am Rand des Rastelementes 15 vorgesehene Raststufe 21 springt bezüglich der Achse A axial zum dritten Beschlagteil 14 vor und wird durch zwei axial entgegengesetzte, in Umfangsrichtung versetzte Abkröpfungen gebildet. Eine Fangklinke 22 ist mittels eines Lagerbolzens 24 schwenkbar am dritten Beschlagteil 14 auf der dem zweiten Beschlagteil 11 zugewandten Seite gelagert. Der Lagerbolzen 24 dient zugleich als Anschlag zum Zusammenwirken mit dem ersten Rastanschlag 19, d.h. er begrenzt die Schwenkbewegung des dritten Beschlagteils 14 nach hinten, und zwar sowohl im Normalfall als auch im (Heck-)Crashfall. Zur Begrenzung der Schwenkbewegung des dritten Beschlagteils 14 nach vorne im (Front-)Crashfall ist in radialer Verlängerung der Fangklinke 22 und in geringem Abstand dazu ein zweiter Rastan - schlag 25 vorgesehen. Im Front-Crashfall gelangt die Fangklinke 22 dann in Anlage an den zweiten Rastanschlag 25, ohne dass von diesem ein öffnendes Moment auf die Fangklinke 22 ausgeübt wird.

Auf einem Lägerpin 26 der Fangklinke 22 ist eine Spannklinke 30 schwenkbar gelagert, welche zusätzlich mittels einer Schlitz-Zapfen-Führung 32 mit der Fangklinke 22 gekoppelt ist. Die Spannklinke 30, welche einen angeformten Spannzahn 34 aufweist, wird von einer als Spiralfeder ausgebildeten Spannfeder 36 beaufschlagt und liegt daher mit Vorspannung mit diesem Spannzahn 34 an der hinteren Flanke der Raststufe 21 an. Dadurch ist das dritte Beschlagteil 14 spielfrei mit dem Rastelement 15 und damit mit dem zweiten Beschlagteil 11 verriegelt. Dabei spannt die Spannfeder 36 als gemeinsame Feder sowohl die Fangklinke 22 als auch die Spannklinke 30 in die Schließrichtung, also in die radiale Richtung, vor. Ein am dritten Beschlagteil 14 befestigter Deckel 38 deckt die Spannklinke 30, die Fangklinke 22 samt Lagerbolzen 24 und die Spannfeder 36 ab. Auf der vom zweiten Beschlagteil abgewandten Seite der Spannklinke 30 steht von der Spannklinke 30 ein Entriegelungspin 40 axial ab, welcher das dritte Beschlagteil 14 in einer gekrümmten Kulisse durchdringt. Auf der vom zweiten Beschlagteil 11 abgewandten Seite des dritten Beschlagteils 14 ist am Entriegelungspin 40 ein mit dem Handhebel 8 in Wirkverbindung stehender erster Seilzug 42 befestigt. Der Entriegelungspin 40 kann auf dieser Seite des dritten Beschlagteils 14 auch mit einer Abdeckung für die Kulisse versehen sein. Zum Entriegeln des dritten Beschlagteils 14 wird mittels des ersten Seilzugs 42 der Entriegelungspin 40 (in der Kulisse) bewegt, welcher dabei die Spannklinke 30 mitnimmt und öffnet, d.h. von der Raststufe 21 trennt, wobei die Spannklinke 30 die Fangklinke 22 öffnet.

Auf wenigstens einer Fahrzeugsitzseite (oder beiden Fahrzeugsitzseiten) ist der Beschlag 5 so ausgebildet, dass auf einem Absatz des dritten Beschlagteils 14 (oder wahlweise dem Rastelement 15 oder dem zweiten Beschlagteil 11) konzentrisch zur Achse A ein Sicherungsring 45 drehbar gelagert ist, welcher in axialer Richtung zwischen dem Rastelement 15 und dem dritten Beschlagteil 14 in der Ebene der Raststufe 21 angeordnet ist. Der Sicherungsring 45 weist einen Sicherungsnocken 47 auf, welcher radial nach außen absteht und in der Nähe der Raststufe 21 angeordnet ist. Der Sicherungsring 45 mit dem Sicherungsnocken 47 ist zum Festlegen des dritten Beschlagteils 14 in der freigeschwenkten Stellung der Lehne 2 vorgesehen, wofür er mit der Spannklinke 30 zusammenwirkt.

Das zweite und das dritte Ausführungsbeispiel stimmen insoweit miteinander überein. Gemäß dem zweiten Ausführungsbeispiel weist der Sicherungsring 45 noch einen Anschlagsnocken 49 auf, welcher ebenfalls radial nach außen absteht. Bezüglich der Achse A in Umfangsrichtung beaufschlagt ein am Adapter 13 schwenkbar gelagerter Sperrhebel 51 den Sicherungsring 45 am Anschlagsnocken 49 (außerhalb der Selbsthemmung) und hält letzteren in Anlage an einen vom Adapter 13 axial abstehenden Sperranschlag 53. Der Sperrhebel 51 wird von einem ebenfalls am Adapter 13 schwenkbar gelagerten Spannhebel 55 beaufschlagt und gesichert, indem der Spannhebel 55 mit einer konkaven Spannkontur 57 am einem vom Sperrhebel 51 axial abstehenden Sperrpin 59 anliegt, ohne dass der Sperrpin 59 ein öffnendes Moment auf den Spannhebel 55 ausüben könnte. Eine zwischen dem Sicherungsnocken 47 und dem Spannhebel 55 wirkende Zugfeder 61 sorgt für notwendige Vor - spannung des Spannhebels 55. Vom Spannhebel 55 steht in axialer Richtung ein Auslösepin 63 ab, welcher vorliegend durch eine Kulisse im Adapter 13 ragt.

Sowohl im zweiten als auch im dritten Ausführungsbeispiel ist in einer der Lagerung des Sicherungsrings 45 entsprechenden Weise auf einem weiteren Absatz des dritten Beschlagteils 14 konzentrisch zur Achse A ein Schaltring 65 drehbar gelagert. Der Schaltring 65 ist in axialer Richtung zwischen dem Sicherungsring 45 und dem dritten Beschlagteil 14 in einer Ebene parallel zur Raststufe 21 angeordnet, wobei die axiale Abmessung der Spannklinke 30 der Summe der axialen Abmessung des Schaltrings 65 plus der axialen Abmessung des Sicherungsrings 45 entspricht. Die axiale Abmessung des Sicherungsrings 45 entspricht der axialen Abmessung der Raststufe 21. Der Schaltring 65 weist einen radial nach außen abstehenden Schaltnocken 67 auf, welcher in Umfangsrichtung in einem Winkelbereich zwischen der Raststufe 21 und dem Sicherungsnocken 47 angeordnet ist und eine in Rückwärtsschwenkrichtung der Lehne 2 radial anwachsende Flanke aufweist. Im zweiten Ausführungsbeispiel weist der Schaltring 65 ferner zwei radial nach außen abstehende Sperrfinger 69 auf, die zwischen sich mit Spiel den Sperranschlag 53 des Adapters 13 aufnehmen, wodurch der Schaltring 65 festgehalten wird. Das Spiel gleicht bei der Neigungseinstellung der Lehne 2 den Einfluss der Taumelbewegung der Beschlagteile 9 und 11 relativ zueinander auf die Position des Schaltrings 65 aus.

Im zweiten und dritten Ausführungsbeispielen ist der Fahrzeugsitz 1 mittels eines Längseinstellers 81 längseinstellbar, d.h. in der Sitzlängsposition einstellbar. Der zwei Sitzschienenpaare aufweisende Längseinsteller 81 ist hierfür mittels eines Griffs 83 entriegelbar und verriegelt selbsttätig nach Loslassen des Griffs 83. Der Längseinsteller 81 wird aber auch beim Freischwenken der Lehne 2 mittels des Handhebels 8 entriegelt, so dass der Fahrzeugsitz 1 (mittels des Längseinstellers 81) nach vorne verfahrbar ist, um zusätzlich zum Freischwenken der Lehne 2 den Zugang zum Fond zu erleichtern. Das Entriegeln des Längseinstellers 81 erfolgt dabei direkt mittels des Handhebels 8 oder indirekt, indem beim.Beschlag 5 auf der Fahrzeugsitzseite ohne Sicherungsring 45 in an sich bekannter Weise ein Entriegelungsring vorsehen ist, welcher beim Vorschwenken der Lehne 2 mitgenommen wird und dann mittels eines Bowdenzugs oder dergleichen die Verriegelung des Längseinstellers 81 ansteuert. Eine Memoryvorrichtung des Längseinstellers 81, mittels welcher die vor dem Freischwenken eingestellte Sitzlängsposition (Memory-Position) auffindbar ist, steht mittels zweiten Seilzugs 85, vorzugsweise eines Bowdenzugs, in Wirkverbindung mit dem Beschlag 5.

Das Freischwenken der Lehne 2 wird durch das Entriegeln des dritten Beschlagteils 14 auf beiden Fahrzeugsitzseiten eingeleitet. Im zweiten und dritten Ausführungsbeispiel werden die Spannklinke 30 und die Fangklinke 22 auf die zuvor beschriebene Weise radial aus dem Rastelement 15 des zweiten Beschlagteils 11 ausgehoben. Mit der Schwenkbewegung der Lehne 2 nach vorne gelangt die Spannklinke 30 mit ihrem Spannzahn 34 nacheinander auf die radial nach außen weisenden Seite der Raststufe 21, des Schaltnockens 67 und des Sicherungsnockens 47. Nach dem Passieren des Sicherungsnockens 47 springt die Außenkontur des Sicherungsrings 45 radial zurück. Die Spannklinke 30 fällt nun hinter dem Sicherungsnocken 47 (radial nach innen) ein und hintergreift diesen (innerhalb der Selbsthemmung), womit das dritte Beschlagteil 14 festgelegt ist.

Die vorgeschwenkte Lehne 2 befindet sich nun in ihrer freigeschwenkten Stellung, welche einen ungehinderten Zugang zum Fond erlaubt und durch das Festlegen des dritten Beschlagteils 14 gesichert ist. Zugleich befindet sich der Fahrzeugsitz 1 in einer vorderen Sitzlängsposition. Da die Winkelposition des Sicherungsnockens 47 (bis auf eine sehr geringe oszillierende Bewegung als Projektion der Taumelbewegung) konstant ist bezüglich der Winkelposition des ersten Beschlagteils 9 und des Adapters 13 samt Sperranschlag 53, wird das dritte Beschlagteil 14 - und damit die Lehne 2 - immer in der gleichen Position relativ zum ersten Beschlagteil 9 - und damit zum Sitzteil 3 - gesichert, also unabhängig von der eingestellten Neigung der Lehne 2.

Um in die Ausgangsstellung zurückzukehren, wird zunächst der Fahrzeugsitz 1 wieder nach hinten verfahren, beispielsweise durch Zug an der Lehne 2. Wenn die Memory-Position erreicht ist, verriegelt der Längseinsteller 81 und zieht dabei am zweiten Seilzug 85.

Im zweiten Ausführungsbeispiel ist der zweite Seilzug 85 am Auslösepin 63 des Spannhebels 55 angebracht, d.h. die Memoryvorrichtung steuert die beaufschlagenden Mittel des Sicherungsrings 45 an. Wenn die Memoryvorrichtung des Längseinstellers 81 daher am zweiten Seilzug 85 zieht, schwenkt der zweite Seilzug 85 den Spannhebel 55, wodurch auch der außerhalb der Selbsthemmung liegende Sperrhebel 51 frei kommt. Das die Kraft an der Lehne 2 einleitende dritte Beschlagteil 14 zieht mittels der Spannklinke 30 den nunmehr frei drehbaren Sicherungsring 45 in Umfangsrichtung mit der Lehne 2 mit. Der Spannzahn 34 gelangt auf die radial anwachsende Flanke des (festgehaltenen) Schaltnockens 67 des Schaltrings 65. Dadurch wird - mit der fortschreitender Schwenkbewegung der Lehne 2 nach hinten - die Spannklinke 30 in radialer Richtung nach außen ausgehoben, also das Zusammenwirken von Spannklinke 30 und Sicherungsring 45 aufgehoben, und die Lehne 2 kann ungehindert zurückgeschwenkt werden. Die Spannklinke 30 gelangt dann über den Sicherungsnocken 47 und die Raststufe 21 und fällt bei Erreichen der Ausgangsstellung wieder hinter die Raststufe 21 (radial nach innen) ein, so dass der Beschlag 5 wieder verriegelt ist. Der von der Spannklinke 30 freigegebene Sicherungsring 45 wird von der Zugfeder 61 zurückgezogen, worauf auch der Sperrhebel 51 und der Spannhebel 55 ihre Ausgangspositionen wieder einnehmen.

Wird die Memory-Position nicht erreicht, beispielsweise aufgrund von Gegenständen im Fußraum, so ist eine Freigabe der hinter dem Sicherungsnocken 47 eingefallenen Spannklinke 30 durch ein Betätigen des Handhebels 8 möglich, d.h. es ist eine Reset-Funktion verwirklicht.

Das dritte Ausführungsbeispiel gleicht dem zweiten Ausführungsbeispiel, soweit nicht abweichend beschrieben, weshalb gleiche oder gleichwirkende Bauteile gleiche Bezugszeichen tragen.

Gemäß dem dritten Ausführungsbeispiel weist der Sicherungsring 45 außer dem Sicherungsnocken 47 noch zwei radial nach außen abstehende Sperrfinger 69 auf, die zwischen sich mit Spiel den Sperranschlag 53 des Adapters 13 aufnehmen, wodurch der Sicherungsring 45 festgehalten wird. Das Spiel gleicht bei der Neigungseinstellung der Lehne 2 den Einfluss der Taumelbewegung auf die Position des Sicherungsrings 45 aus. Der Schaltring 65 weist außer dem Schaltnocken 67 noch einen Anschlagsnocken 49 auf, welcher ebenfalls radial nach außen absteht. Zwischen dem Anschlagsnocken 49 und dem Adapter 13 wirkt eine Zugfeder 61, welche den Sicherungsring 45 bezüglich der Achse A in Umfangsrichtung beaufschlagt. Diese Vorspannung hält den Anschlagsnocken 49 in Anlage an den Sperr - anschlag 53. Der Schaltring 65 weist zwischen dem Schaltnocken 67 und dem Anschlagsnocken 49 noch einen radial abstehenden Auslösefinger 87 auf. An diesem Auslösefinger 87 ist der zweite Seilzug 85 befestigt, beispielsweise an einem vom Auslösefinger 87 axial abstehenden Auslösepin 63, d.h. die Memoryvorrichtung des Längseinstellers 81 steuert den Schaltring 65 an.

Das Verriegeln des dritten Beschlagteils 14 in der Ausgangsstellung, d.h. wenn die Lehne 2 sich in einer Gebrauchsstellung befindet, das Entriegeln des dritten Beschlagteils 14, das Freischwenken der Lehne 2, das Festlegen der dritten Beschlagteils 14 in der freigeschwenkten Stellung der Lehne 2 und das Zurückschieben des Fahrzeugsitzes 1 in die Memory-Position stimmen beim zweiten und dritten Ausführungsbeispiel überein. Der Längseinsteller 81 verriegelt bei Erreichen der Memory-Position und zieht dabei am zweiten Seilzug 85.

Der am Auslösefinger 87 angreifende zweite Seilzug 85 dreht nun den Schaltring 65 entgegen dessen Vorspannung in die Vorwärtsschwenkrichtung der Lehne 2. Der Spannzahn 34 gelangt auf die radial anwachsende Flanke des (sich bewegenden) Schaltnockens 67 des Schaltrings 65. Dadurch wird - mit der fortschreitender Schwenkbewegung des Schaltrings 65 - die Spannklinke 30 in radialer Richtung nach außen ausgehoben, also das Zusammenwirken von Spannklinke 30 und Sicherungsring 45 aufgehoben, und die Lehne 2 kann ungehindert zurückgeschwenkt werden. Die Spannklinke 30 gelangt dann über den Sicherungsnocken 47 und die Raststufe 21 und fällt bei Erreichen der Ausgangsstellung wieder hinter die Raststufe 21 (radial nach innen) ein, so dass der Beschlag 5 wieder verriegelt ist. Der vom zweiten Seilzug 85 freigegebene Schaltring 65 wird von der Zugfeder 61 in seine Ausgangsposition zurückgezogen. Die Reset-Funktion bei Nichterreichen der Memory-Position mittels Betätigen des Handhebels 8 ist auch im dritten Ausführungsbeispiel verwirklicht.

Während im dritten Ausführungsbeispiel der Sicherungsring 45 quasi drehfest gesetzt ist und der Schaltring 65 drehbar ist und von einer Feder gehalten wird, ist eine Abwandlung hierzu möglich, gemäß welcher entsprechend dem zweiten Aus - führungsbeispiel der Schaltring 65 quasi drehfest ist und der Sicherungsring 45 drehbar ist und von einer Feder gehalten wird. Eine solche Abwandlung, die insbesondere für Fahrzeugsitze 1 ohne memorisierten Längseinsteller 81 interessant ist, erlaubt in der freigeschwenkten Stellung ein gezieltes Entsichern der Lehne 2 durch Beaufschlagen der Lehne 2, beispielsweise am Lehnenkopf, indem mittels Schwenken des dritten Beschlagteils 14 die Spannklinke 30 und der Sicherungsring 45 entlang des Schaltnockens 67 des Schaltrings 65 gezogen werden können, bis die Spannklinke 30 öffnet.

### Bezugszeichenliste

- 201, 1: Fahrzeugsitz
- 202, 2: Lehne
- 203, 3: Sitzteil
- 205, 5: Beschlag
- 207, 7: Handrad
- 208, 8: Handhebel
- 209, 9: erstes Beschlagteil
- 211, 11: zweites Beschlagteil
- 213, 13: Adapter
- 214, 14: drittes Beschlagteil
- 215, 15: Rastelement
- 217, 17: Befestigungsscheibe
- 219, 19: erster Rastanschlag
- 220: Klinke
- 220a: Verriegelungsbereich
- 220b: Anlagefläche
- 220c: Entriegelungsfinger
- 220d: Sicherungskontur
- 220e: Schaltfinger
- 224, 24: Lagerbolzen
- 225, 25: zweiter Rastanschlag
- 226: Lagerbuchse
- 227: Entriegelungswelle
- 229: Fangstück
- 231: Spannstück
- 232, 32: Schlitz-Zapfen-Führung
- 236, 36: Spannfeder
- 237: Spiralfeder
- 238, 38: Deckel
- 242, 42: erster Seilzug
- 245,45: Sicherungsring
- 247,47: Sicherungsnocken
- 249,49: Anschlagsnocken
- 253, 53: Sperranschlag
- 265, 65: Schaltring
- 267, 67: Schaltnocken
- 269,69: Sperrfinger
- 281, 81: Längseinsteller
- 283, 83: Griff
- 285, 85: zweiter Seilzug
- 287, 87: Auslösefinger
- 289: Puffer
- 291: Kniehebel
- 293: erster Hebel
- 295: zweiter Hebel
- 296: Verbindungsgelenk
- 297: Kniehebelfeder
- 21: Raststufe
- 22: Fangklinke
- 26: Lagerpin
- 30: Spannklinke
- 34: Spannzahn
- 40: Entriegelungspin
- 51: Sperrhebel
- 55: Spannhebel
- 57: Spannkontur
- 59: Sperrpin
- 61: Zugfeder
- 63: Auslösepin
- A: Achse

## Patentansprüche

1. Beschlag für einen Fahrzeugsitz, insbesondere für einen Kraftfahrzeugsitz, mit einem sitzteilfesten ersten Beschlagteil (209; 9), einem relativ zum ersten Beschlagteil (209; 9) verdrehbaren zweiten Beschlagteil (211; 11) für die Neigungseinstellung der Lehne (202; 2) des Fahrzeugsitzes (201; 1) zwischen mehreren Gebrauchsstellungen, einem lehnenfesten, mit dem zweiten Beschlagteil (211; 11) verriegelbaren und für ein zentrisches Freischwenken der Lehne (202; 2) relativ zum zweiten Beschlagteil (211; 11) um eine Achse (A) schwenkbaren dritten Beschlagteil (214; 14), welches in der freigeschwenkten Stellung der Lehne (202; 2) sicherbar ist, und einer Klinke (220; 30), welche das dritte Beschlagteil (214; 14) sowohl in den Gebrauchsstellungen der Lehne (202; 2) verriegelt als auch in der freigeschwenkten Stellung der Lehne (202; 2) sichert, und die dem dritten Beschlagteil (214; 14) zugeordnete Klinke (220; 30) das dritte Beschlagteil (214; 14) in der freigeschwenkten Stellung der Lehne (202; 2) durch Zusammenwirken mit einem Sicherungsring (245; 45) sichert, welcher am zweiten Beschlagteil (211; 11) gelagert ist und insbesondere am ersten Beschlagteil (209; 9) festgehalten wird, **dadurch gekennzeichnet, dass** ein relativ zum Sicherungsring (245; 45) drehbarer Schaltring (265; 65) vorgesehen ist, welcher bei einer Relativdrehung von Sicherungsring (245; 45) und Schaltring (265; 65) das Zusammenwirken der Klinke (220; 30) und des Sicherungsrings (245; 45) aufhebt.

2. Beschlag nach Anspruch 1, **dadurch gekennzeichnet, dass** die Klinke (220; 30) beim Zusammenwirken mit dem Sicherungsring (245; 45) einen Sicherungsnocken (247; 47) des Sicherungsrings (245; 45) hintergreift, wobei die Klinke (220; 30) zum Zusammenwirken mit dem Sicherungsring (245; 45) hinter dem Sicherungsnocken (247; 47) vorzugsweise radial nach innen einfällt und beim Aufheben des Zusammenwirkens vorzugsweise radial nach außen ausgehoben wird.

3. Beschlag nach Anspruch 1 oder 2, **dadurch gekennzeichnet, dass** der Schaltring (65; 165) einen Schaltnocken (67; 167) mit einer in Rückwärtsschwenkrichtung der Lehne (2) bezüglich der Achse (A) radial anwachsende Flanke aufweist, insbesondere indem zum Aufheben des Zusammenwirkens von Klinke (220; 30) und Sicherungsring (245; 45) der Sicherungsring (245; 45) oder der Schaltring (265; 65) sich in die Vorwärtsschwenkrichtung der Lehne (202; 2) dreht, insbesondere entgegen einer Vorspannung, wodurch die Klinke (220; 30), welche zum Zusammenwirken mit dem Schaltring (265) vorzugsweise einen Schaltfinger (220e) aufweist, vorzugsweise auf die radial anwachsende Flanke des Schaltnockens (267; 67) des Schaltrings (265; 65) gelangt und - mit der fortschreitender Schwenkbewegung des Sicherungsrings (245; 45) oder des Schaltrings (265; 65) - ausgehoben wird.

4. Beschlag nach einem der vorhergehenden Ansprüche, **dadurch gekennzeichnet, dass** entweder der Sicherungsring (245; 45) oder der Schaltring (265; 65) relativ zum ersten Beschlagteil (209; 9) oder zu einem mit dem ersten Beschlagteil (209; 9) fest verbundenen Adapter (213; 13) festgesetzt wird, vorzugsweise mittels eines Kniehebels (291).

5. Beschlag nach einem der vorhergehenden Ansprüche, **dadurch gekennzeichnet, dass** die dem dritten Beschlagteil (214; 14) zugeordnete Klinke (220; 30) das dritte Beschlagteil (214; 14) in den Gebrauchsstellungen der Lehne (202; 2) - insbesondere spielfrei - mit dem zweiten Beschlagteil (211; 11) verriegelt, insbesondere mittels eines Verriegelungsbereichs (220a) und insbesondere mit einem Rastelement (215; 15), welches fest mit dem zweiten Beschlagteil (211; 11) verbunden ist.

6. Beschlag nach einem der vorhergehenden Ansprüche, **dadurch gekennzeichnet, dass** eine Entriegelungswelle (227) vorgesehen ist, deren Drehung um ihre eigene Achse die Klinke (220; 30) wenigstens mittelbar entriegelt, wobei die Entriegelungswelle (227) vorzugsweise im dritten Beschlagteil (214) drehbar gelagert ist.

7. Beschlag nach einem der vorhergehenden Ansprüche, **dadurch gekennzeichnet, dass** zum Verriegeln des dritten Beschlagteils (214; 14) in den Gebrauchsstellungen der Lehne (202; 2) ein federbelastetes Spannstück (231) die Klinke (220; 30) beim normalen Sitzgebrauch in ihrer Position hält, insbesondere durch Beaufschlagung einer Anlagefläche (220b) der Klinke (220; 30).

8. Beschlag nach einem der vorhergehenden Ansprüche, **dadurch gekennzeichnet, dass** zum Verriegeln des dritten Beschlagteils (214; 14) in den Gebrauchsstellungen der Lehne (202; 2) ein - insbesondere federbelastetes - Fangstück (229) im Crashfall die Klinke (220; 30) abstützt.

9. Beschlag nach Anspruch 6, 7 und 8, **dadurch gekennzeichnet, dass** das Spannstück (231) und das Fangstück (229) um eine durch die Entriegelungswelle (227) definierte, gemeinsame Achse schwenkbar sind, wobei das Spannstück (231) vorzugsweise drehfest auf der Entriegelungswelle (227) sitzt und/oder mit dieser auf Mitnahme gekoppelt ist, wobei das Fangstück (229) vorzugsweise schwenkbar auf der Entriegelungswelle (227) sitzt und/oder mit dieser auf Mitnahme gekoppelt ist, und wobei insbesondere das Spannstück (231) und das Fangstück (229) vorzugsweise mittels einer Schlitz-Zapfen-Führung (232) mit einem Leerweg auf Mitnahme gekoppelt sind.

10. Beschlag nach einem der vorhergehenden Ansprüche, **dadurch gekennzeichnet, dass** das erste Beschlagteil (209; 9) und das zweite Beschlagteil (211; 11) in baulicher Hinsicht zusammen eine scheibenförmige Einheit bilden.

11. Beschlag nach einem der vorhergehenden Ansprüche, **dadurch gekennzeichnet, dass** das erste Beschlagteil (209; 9) und das zweite Beschlagteil (211; 11) mittels eines insbesondere selbsthemmenden - Exzenterumlaufgetriebes miteinander in Getriebeverbindung stehen, wobei das Exzenterumlaufgetriebe eine Relativdrehung des ersten Beschlagteils (209; 9) und des zweiten Beschlagteils (211; 11) vorzugsweise mit überlagerter Taumelbewegung erzwingt.

12. Fahrzeugsitz (201; 1) mit einer neigungseinstellbaren und freischwenkbaren Lehne (202; 2) und einem Längseinsteller (281; 81), mittels dessen der Fahrzeugsitz (201; 1) beim Freischwenken der Lehne (202; 2) nach vorne verfahrbar ist, **gekennzeichnet durch** wenigstens einen Beschlag (205; 5) nach einem der vorhergehenden Ansprüche zur Neigungseinstellung und zum Freischwenken der Lehne (202; 2).

13. Fahrzeugsitz nach Anspruch 12, **dadurch gekennzeichnet, dass** der Längseinsteller (281; 81) eine Memoryvorrichtung aufweist, welche die vor dem Freischwenken eingestellte Sitzlängsposition auffindet und dann einen der Ringe (245; 265; 45; 65) oder dessen beaufschlagende Mittel (285) ansteuert.

14. Fahrzeugsitz nach Anspruch 12, **dadurch gekennzeichnet, dass** bei Nichterreichen der vor dem Freischwenken eingestellte Sitzlängsposition das Zusammenwirken von Klinke (220; 30) und Sicherungsring (245; 45) durch Ansteuern der Klinke (220; 30), des Sicherungsrings (245; 45) oder des Schaltrings (265; 65) aufhebbar ist.

## Claims

1. A fitting for a vehicle seat, in particular for a motor vehicle seat, with a first fitting part (209; 9) fixed with respect to the seat part, with a second fitting part (211; 11), rotatable in relation to the first fitting part (209; 9), for setting the inclination of the backrest (202; 2) of the vehicle seat (201; 1) between a plurality of positions of use, with a third fitting part (214; 14) which is fixed with the respect to the backrest, which can be interlocked with the second fitting part (211; 11) and can be pivoted about an axis (A) in relation to the second fitting part (211; 11) for a centric free pivoting of the backrest (202; 2) and which can be secured in the freely pivoted position of the backrest (202; 2), and with a pawl (220; 30) which locks the third fitting part (214; 14) in the positions of use of the backrest (202; 2) and secures it in the freely pivoted position of the backrest (202; 2), and with the pawl (220; 30) assigned to the third fitting part (214; 14) securing the third fitting part (214; 14) in the freely pivoted position of the backrest (202; 2) by cooperation with a securing ring (245; 45) which is mounted on the second fitting part (211; 11) and, in particular, is retained on the first fitting part (209; 9), **characterized in that** a switching ring (265; 65) rotatable in relation to the securing ring (245; 45) is provided, which, during a relative rotation of the securing ring (245; 45) and switching ring (265; 65), cancels the cooperation of the pawl (220; 30) and of the securing ring (245; 45).

2. The fitting as claimed in claim 1, **characterized in that** the pawl (220; 30), during cooperation with the securing ring (245; 45), engages behind a securing boss (247; 47) of the securing ring (245; 45), for cooperation with the securing ring (245; 45) the pawl (220; 30) dropping behind the securing boss (247; 47) preferably radially inward and, when cooperation is canceled, being lifted out preferably radially outward.

3. The fitting as claimed in claim 1 or 2, **characterized in that** the switching ring (65; 165) has a switching cam (67; 167) with a flank growing radially with respect to the axis (A) in the reverse pivoting direction of the backrest (2), particularly **in that**, to cancel the cooperation of the pawl (220; 30) and securing ring (245; 45), the securing ring (245; 45) or the switching ring (265; 65) rotates in the forward pivoting direction of the backrest (202; 2), in particular counter to a prestress, with the result that the pawl (220; 30), which preferably has a switching finger (220e) for cooperation with the switching ring (265), passes preferably onto the radially growing flank of the switching cam (267; 67) of the switching ring (265; 65) and, with the progressive pivoting movement of the securing ring (245; 45) or of the switching ring (265; 65), is lifted out.

4. The fitting as claimed in one of the preceding claims, **characterized in that** either the securing ring (245; 45) or the switching ring (265; 65) is fixed, preferably by means of a toggle lever (291), in relation to the first fitting part (209; 9) or in relation to an adapter (213; 13) connected fixedly to the first fitting part (209; 9.

5. The fitting as claimed in one of the preceding claims, **characterized in that** the pawl (220; 30) assigned to the third fitting part (214; 14) interlocks the third fitting part (214; 14), in particular free of play, with the second fitting part (211; 11) in the positions of use of the backrest (202; 2), in particular by means of a locking region (220a) and, in particular, by means of a latching element (215; 15) which is connected fixedly to the second fitting part (211; 11).

6. The fitting as claimed in one of the preceding claims, **characterized in that** an unlocking shaft (227) is provided, of which the rotation about its own axis unlocks the pawl (220; 30) at least indirectly, the unlocking shaft (227) preferably being mounted rotatably in the third fitting part (214).

7. The fitting as claimed in one of the preceding claims, **characterized in that**, for locking the third fitting part (214; 14) in the positions of use of the backrest (202; 2), a spring-loaded tension piece (231) holds the pawl (220; 30) in its position during the normal use of the seat, in particular by action upon a bearing surface (220b) of the pawl (220; 30).

8. The fitting as claimed in one of the preceding claims, **characterized in that**, for locking the third fitting part (214; 14) in the positions of use of the backrest (202; 2), an, in particular spring-loaded, catching piece (229) supports the pawl (220; 30) in the event of a crash.

9. The fitting as claimed in claims 6, 7 and 8, **characterized in that** the tension piece (231) and the catching piece (229) are pivotable about a common axis defined by the unlocking shaft (227), the tension piece (231) being seated preferably fixedly in terms of rotation on the unlocking shaft (227) and/or being coupled for take-up to the latter, the catching piece (229) preferably being seated pivotably on the unlocking shaft (227) and/or being coupled for take-up to the latter, and, in particular, the tension piece (231) and the catching piece (229) being coupled for take-up with idle travel preferably by means of a mortise-and-tenon guide (232).

10. The fitting as claimed in one of the preceding claims, **characterized in that** the first fitting part (209; 9) and the second fitting part (211; 11) in structural terms together form a disk-shaped unit.

11. The fitting as claimed in one of the preceding claims, **characterized in that** the first fitting part (209; 9) and the second fitting part (211; 11) are in geared connection with one another by means of an, in particular self-locking, eccentric epicyclic gear, the eccentric epicyclic gear bringing about a relative rotation of the first fitting part (209; 9) and of the second fitting part (211; 11) preferably with a superposed wobbling movement.

12. A vehicle seat (201; 1) with a backrest (202; 2) of adjustable inclination and freely pivotable and with a longitudinal adjuster (281; 81), by means of which the vehicle seat (201; 1) can be moved forward during the free pivoting of the backrest (202; 2), **characterized by** at least one fitting (205; 5) as claimed in one of the preceding claims for setting the inclination and for the free pivoting of the backrest (202; 2).

13. The vehicle seat as claimed in claim 12, **characterized in that** the longitudinal adjuster (281; 81) has a memory device which finds the longitudinal position of the seat set before the free pivoting and which then activates one of the rings (245; 265; 45; 65) or its acting means (285).

14. The vehicle seat as claimed in claim 12, **characterized in that**, when the longitudinal position of the seat set before the free pivoting is not reached, the cooperation of the pawl (220; 30) and securing ring (245; 45) can be canceled by the activation of the pawl (220; 30), of the securing ring (245; 45) or of the switching ring (265; 65).

## Revendications

1. Armature pour un siège de véhicule, en particulier pour un siège de véhicule automobile, avec une première partie d'armature (209 ; 9) solidaire d'une partie de siège, une deuxième partie d'armature (211 ; 11) apte à tourner par rapport à la première partie d'armature (209 ; 9) pour le positionnement en inclinaison du dossier (202 ; 2) du siège de véhicule (201 ; 1) entre plusieurs positions d'utilisation, une troisième partie d'armature (214 ; 14) solidaire du dossier, verrouillable avec la deuxième partie d'armature (211 ; 11) et apte à pivoter autour d'un axe (A) par rapport à la deuxième partie d'armature (211 ; 11) pour un pivotement libre central du dossier (202 ; 2), laquelle troisième partie d'armature (214 ; 14) peut être fixée en position de libre rotation du dossier (202 ; 2), et un cliquet (220 ; 30), lequel non seulement verrouille la troisième partie d'armature (214 ; 14) dans les positions d'utilisation du dossier (202 ; 2) mais encore la fixe en position de libre rotation du dossier (202 ; 2), et le cliquet (220 ; 30) associé à la troisième partie d'armature (214 ; 14) fixe la troisième partie d'armature (214 ; 14) en position de libre en rotation du dossier (202 ; 2) en coopérant avec une bague de fixation (245 ; 45), laquelle est disposée sur la deuxième partie d'armature (211 ; 11) et en particulier est attachée à la première partie d'armature (209 ; 9), **caractérisée par le fait qu'**il est prévu une bague de commutation (265 ; 65) apte à tourner par rapport à la bague de fixation (245 ; 45), laquelle bague de commutation (265 ;65) supprime la coopération du cliquet (220 ; 30) et de la bague de fixation (245 ; 45) lors d'une rotation relative de la bague de fixation (245 ; 45) et de la bague de commutation (265 ; 65).

2. Armature selon la revendication 1, **caractérisée par le fait que** le cliquet (220 ; 30) saisit par l'arrière un ergot de fixation (247 ; 47) de la bague de fixation (245 ; 45) lorsqu'il coopère avec la bague de fixation (245 ; 45), le cliquet (220 ; 30) arrivant de préférence radialement vers l'intérieur derrière l'ergot de fixation (247 ; 47) pour coopérer avec la bague de fixation (245 ; 45) et lors de la suppression de la coopération, il est enlevé de préférence radialement vers l'extérieur.

3. Armature selon l'une des revendications 1 ou 2, **caractérisée par le fait que** la bague de commutation (65 ; 165) comprend un ergot de commutation (67 ; 167) avec un flanc s'accroissant radialement par rapport à l'axe (A) dans la direction de pivotement vers l'arrière du dossier (2), en particulier dans lequel, pour la suppression de la coopération du cliquet (220 ; 30) et de la bague de fixation (245 ; 45), la bague de fixation (245 ; 45) ou la bague de commutation (265 ; 65) tourne dans la direction de pivotement vers l'avant du dossier (202 ; 2), en particulier à l'encontre d'une précontrainte, ce par quoi le cliquet (220 ; 30), lequel comprend de préférence un doigt de commutation (220e) pour la coopération avec la bague de commutation (265), vient de préférence sur le flanc s'accroissant radialement de l'ergot de commutation (267 ; 67) de la bague de commutation (265 ; 65) et est extrait - avec le mouvement de pivotement progressif de la bague de fixation (245 ; 45) ou de la bague de commutation (265 ; 65).

4. Armature selon l'une des revendications précédentes, **caractérisée par le fait que** soit la bague de fixation (245 ; 45) soit la bague de commutation (265 ; 65) est solidement fixée par rapport à la première partie d'armature (209 ; 9) ou par rapport à un adaptateur (213 ; 13) relié fermement à la première partie d'armature (209 ; 9), de préférence au moyen d'une genouillère (291).

5. Armature selon l'une des revendications précédentes, **caractérisée par le fait que** le cliquet (220 ; 30) associé à la troisième partie d'armature (214 ; 14) verrouille, en particulier au moyen d'un domaine de verrouillage (220a) dans les positions d'utilisation du dossier (202 ; 2) - en particulier sans jeu - la troisième partie d'armature (214 ;14) à la deuxième partie d'armature (211 ; 11) et en particulier à un élément d'encliquetage (215 ; 15) lequel est fermement lié à la deuxième partie d'armature (211 ; 11).

6. Armature selon l'une des revendications précédentes, **caractérisée par le fait qu'**un arbre de déverrouillage (227) est prévu, dont la rotation autour de son axe propre déverrouille le cliquet (220 ; 30) au moins indirectement, l'axe de déverrouillage (227) étant monté apte à tourner de préférence dans la troisième partie d'armature (214).

7. Armature selon l'une des revendications précédentes, **caractérisée par le fait que** pour le verrouillage de la troisième partie d'armature (214 ; 14) dans les positions d'utilisation du dossier (202 ; 2), une pièce de serrage (231) sollicitée élastiquement maintient le cliquet (220 ; 30) dans sa position lors de l'utilisation normale du siège, en particulier par sollicitation d'une surface d'appui (200b) du cliquet (220 ; 30).

8. Armature selon l'une des revendications précédentes, **caractérisée par le fait que** pour verrouiller la troisième partie d'armature (214 ; 14) dans les positions d'utilisation du dossier (202 ; 2), une pièce d'arrêt (229) - en particulier sollicitée élastiquement - soutient le cliquet (220 ; 30) en cas de collision.

9. Armature selon l'une des revendications 6, 7 et 8, **caractérisée par le fait que** la pièce de serrage (231) et la pièce d'arrêt (229) sont aptes à pivoter autour d'un axe commun défini par l'arbre de déverrouillage (227), la pièce de serrage (231) étant en appui de préférence solidaire en rotation sur l'axe de déverrouillage (227) et/ou étant couplée en entraînement avec celui-ci, la pièce d'arrêt (229) étant en appui de préférence apte à pivoter sur l'axe de déverrouillage (227) et/ou étant couplée en entraînement avec celui-ci, et en particulier la pièce de serrage (231) et la pièce d'arrêt (229) étant couplées en entraînement de préférence au moyen d'une glissière encoche-tenon (232) avec une course à vide.

10. Armature selon l'une des revendications précédentes, **caractérisée par le fait que** la première partie d'armature (209 ; 9) et la deuxième partie d'armature (211 ; 11) forment ensemble une unité structurale en forme de disque.

11. Armature selon l'une des revendications précédentes, **caractérisée par le fait que** la première partie d'armature (209 ; 9) et la deuxième partie d'armature (211 ; 11) sont en liaison d'entraînement au moyen d'un engrenage planétaire à excentrique - en particulier autobloquant -, l'engrenage planétaire à excentrique forçant une rotation relative de la première partie d'armature (209 ; 9) et de la deuxième partie d'armature (211 ; 11) de préférence avec un mouvement de nutation superposé.

12. Siège de véhicule (201 ; 1) avec un dossier (202 ; 2) réglable en inclinaison et apte à pivoter librement et un dispositif de réglage en longueur (281 ; 81), au moyen duquel le siège de véhicule (201 ; 1) est déplaçable vers l'avant lors du pivotement libre du dossier (202 ; 2) **caractérisé par** au moins une armature (205 ; 5) telle que définie à l'une des revendications précédentes pour le positionnement en inclinaison et pour le pivotement libre du dossier (202 ; 2).

13. Siège de véhicule selon la revendication 12, **caractérisé par le fait que** le dispositif de réglage en longueur (281 ; 81) comprend un dispositif de mémoire, lequel repère la position en longueur du siège ajustée avant le pivotement libre puis commande l'une des bagues (245 ; 265 ; 45 ; 65) ou son moyen de sollicitation (285).

14. Siège de véhicule selon la revendication 12, **caractérisé par le fait que**, en cas de non obtention de la position en longueur du siège ajustée avant le pivotement libre, la coopération du cliquet (220 ; 30) et de la bague de fixation (245 ; 45) est éliminée par commande du cliquet (220 ; 30), de la bague de fixation (245 ; 45) ou de la bague de commutation (265 ; 65).
